# EUROPEAN PATENT APPLICATION

(11) **EP 4 580 262 A1**
(43) Date of publication of application: **02.07.2025**
(21) Application number: 23870587.5
(22) Date of filing: 21.09.2023
(51) Int. Cl.: H04W 52/02, H04W 76/28

(54) **COMMUNICATION METHOD AND APPARATUS, STORAGE MEDIUM, AND CHIP SYSTEM**

(30) Priority: 30.09.2022 CN 202211216477
(71) Applicant: Huawei Technologies Co., Ltd., Shenzhen, Guangdong 518129 (CN)
(72) Inventor: XUAN, Yidi, Shenzhen, Guangdong 518129 (CN); GUAN, Lei, Shenzhen, Guangdong 518129 (CN); LI, Ruijie, Shenzhen, Guangdong 518129 (CN)
(74) Representative: Pfenning, Meinig & Partner mbB
(86) International application number: PCT/CN2023/120450
(87) International publication number: WO 2024/067355

(57) **Abstract**

A communication method and apparatus, a storage medium, and a chip system are provided, and relate to the field of communication technologies, to reduce power consumption of a network device. The method includes: A terminal apparatus receives first information from the network apparatus, where the first information indicates that transmission of a first channel is not allowed in a first time period, and the first channel includes all uplink channels and/or all downlink channels; and the terminal apparatus skips transmitting, based on the first information, the first channel in the first time period. **In** this way, power consumption of the network apparatus and the terminal apparatus can be reduced.

## Description

### CROSS-REFERENCE TO RELATED APPLICATIONS

This application claims priority to Chinese Patent Application No. 202211216477.4, filed with the China National Intellectual Property Administration on September 30, 2022 and entitled "COMMUNICATION METHOD AND APPARATUS, STORAGE MEDIUM, AND CHIP SYSTEM", which is incorporated herein by reference in its entirety.

### TECHNICAL FIELD

This application relates to the field of communication technologies, and in particular, to a communication method and apparatus, a storage medium, and a chip system.

### BACKGROUND

As communication develops, spectrums used for communication are increasingly wide, a quantity of configured transmit antennas is increasingly large, and power consumption of a network device and a terminal device is increasingly high.

For this problem, currently, discontinuous reception (dis-continuous reception, DRX) can be configured for the terminal device, so that the terminal device detects a physical downlink control channel (physical downlink control channel, PDCCH) only in a specified time period.

An existing DRX mechanism of the terminal device cannot meet a requirement on low power consumption of the network apparatus. In view of this, a solution is urgently needed to reduce power consumption of the network device.

### SUMMARY

This application provides a communication method and apparatus, a storage medium, and a chip system, to reduce power consumption of a network device.

**According to a first aspect,** this application provides a communication method. The communication method may be performed by a terminal apparatus. The terminal apparatus in this application may be a terminal device, or a chip, a unit, or a module inside a terminal device. Alternatively, the terminal apparatus may be a communication apparatus having a function of a terminal device, or a chip, a unit, or a module inside a communication apparatus having a function of a terminal device.

The method includes: The terminal apparatus receives first information from a network apparatus, where the first information indicates that transmission of a first channel is not allowed in a first time period, and the first channel includes all uplink channels and/or all downlink channels; and the terminal apparatus, based on the first information, skips transmitting the first channel in the first time period.

In this application, the network apparatus may be configured with a DRX mechanism of the network apparatus and/or a DTX mechanism of the network apparatus. The terminal apparatus may be configured with a DRX mechanism of the network apparatus and/or a DTX mechanism of the network apparatus. The first time period may be considered as a time period in inactive time or inactive time in one cycle in the DRX mechanism of the network apparatus and/or the DTX mechanism of the network apparatus.

Because the first information indicates the network apparatus not to transmit the first channel in the first time period, the terminal apparatus may not transmit the first channel in the first time period, so that power consumption of the network apparatus can be reduced, and power consumption of the terminal apparatus can also be reduced.

In a possible implementation, the first information further indicates that uplink channel transmission and/or downlink channel transmission are/is allowed in a second time period. When the first information further indicates that the uplink channel transmission is allowed in the second time period, the terminal apparatus sends the uplink channel in the second time period. When the first information further indicates that the downlink channel transmission is allowed in the second time period, the terminal apparatus receives the downlink channel in the second time period.

The second time period may be considered as a time period in active time or active time in one cycle in the DRX mechanism of the network apparatus and/or the DTX mechanism of the network apparatus. Because the uplink channel transmission and/or downlink channel transmission is allowed in the second time period, the terminal apparatus may perform channel transmission in the second time period based on the first information, to meet a service requirement of the terminal apparatus.

For example, the network apparatus and/or the terminal apparatus are/is configured with the DRX mechanism of the network apparatus, and the first time period and the second time period are two time periods in one cycle in the DRX mechanism of the network apparatus. There is no intersection of the second time period and the first time period in one cycle. In a possible implementation, a union set of the first time period and the second time period may be a universal set of one cycle in the DRX mechanism of the network apparatus.

In a possible implementation, when a preset first condition is met, the terminal apparatus transmits a second type of channel in a third time period that is in the first time period.

In this way, flexibility of the solution may be improved to meet some temporary requirements of the terminal apparatus. In addition, compared with a solution in which the terminal apparatus is allowed to transmit all types of channels in the third time period, this solution can limit a type of a channel that can be transmitted by the terminal apparatus, to reduce a quantity of channels that need to be sent by the terminal apparatus, so as to reduce power consumption of the terminal apparatus.

In a possible implementation, the first time period and the second time period are two time periods in one cycle, and the second time period is before the first time period. The first condition includes one or more of the following: in the second time period, indication information for scheduling downlink data or uplink data transmission is received; in the second time period, indication information for activating an aperiodic signal is received; in the second time period, information indicating to start a first timer is received, where an intersection of a time period indicated by the first timer and the first time period is the third time period; or a preset type of uplink channel is sent in the second time period.

If the foregoing condition is met, it indicates that the terminal apparatus may have a requirement for transmitting a channel in next time. Therefore, in this application, time in which channel transmission is allowed is extended. For example, a part of the first time period (for example, the third time period in the first time period) is also used as time in which channel transmission can be performed. The terminal apparatus performs channel transmission in the extended time period, for example, transmits the second type of channel in the third time period. In this way, a requirement of the terminal apparatus can be met.

For example, after the first condition is met, the terminal apparatus may not start the first timer, or may start the first timer. For example, the terminal apparatus may start the first timer when the first condition is met, where start time of the first timer is before the second time period expires. There is the intersection of the time indicated by the first timer and the first time period, and the intersection is the third time period. Duration of the first timer may be configured by the network apparatus by using signaling or may be preset.

In this application, when the network apparatus and/or the terminal apparatus are/is configured with the DRX mechanism of the network apparatus, a channel type included in the second type is an uplink channel type. It can be learned that, in the DRX mechanism of the network apparatus, a type of an uplink channel transmitted between the terminal apparatus and the network apparatus can be controlled, so that a quantity of channels transmitted by the terminal apparatus and/or the network apparatus in the first time period can be reduced. This can reduce power consumption of the terminal apparatus and/or the network apparatus.

When the channel type included in the second type includes the uplink channel type, the second type may include one or more of an uplink channel corresponding to a first PDCCH or a configured granted CG PUSCH.

In still another possible implementation, the network apparatus and/or the terminal apparatus may be configured with the DTX mechanism of the network apparatus. A channel type included in the second type is a downlink channel type. It can be learned that, in the DRX mechanism of the network apparatus, a type of a downlink channel transmitted between the terminal apparatus and the network apparatus can be controlled, so that a quantity of channels transmitted by the terminal apparatus and/or the network apparatus in the first time period can be reduced. This can reduce power consumption of the terminal apparatus and/or the network apparatus.

When the channel type included in the second type includes the downlink channel type, the second type may include one or more of a PDCCH, a downlink channel corresponding to a second PDCCH, a periodic CSI-RS, a semi-persistent CSI-RS, and an SPS PDSCH. The PDCCH is a PDCCH received/detected in the second time period and/or the third time period, and the PDCCH includes the first PDCCH and/or the second PDCCH.

In a possible implementation, the uplink channel corresponding to the first PDCCH includes one or more of a channel sounding reference signal SRS, a physical uplink shared channel PUSCH, a configured grant CG-PUSCH, a PUCCH carrying aperiodic CSI, and a PUSCH carrying aperiodic CSI. The downlink channel corresponding to the second PDCCH includes one or more of a physical downlink shared channel, an SPS PDSCH, and an aperiodic CSI-RS.

In another possible implementation, the first PDCCH includes one or more of a PDCCH scrambled by a C-RNTI, a PDCCH scrambled by a CS-RNTI, a PDCCH scrambled by an MCS-C-RNT, and a PDCCH scrambled by an SP-CSI-RNTI. The second PDCCH includes one or more of a PDCCH scrambled by a C-RNTI, a PDCCH scrambled by a CS-RNTI, and a PDCCH scrambled by an MCS-C-RNT.

In still another possible implementation, the network apparatus and/or the terminal apparatus may be configured with the DTX mechanism of the network apparatus and the DRX mechanism of the network apparatus. A channel type included in the second type includes a downlink channel type and an uplink channel type. It can be learned that, in the DRX mechanism of the network apparatus, a type of a downlink channel and a type of an uplink channel that are transmitted between the terminal apparatus and the network apparatus can be controlled, so that a quantity of channels transmitted by the terminal apparatus and/or the network apparatus in the first time period can be reduced. This can reduce power consumption of the terminal apparatus and/or the network apparatus.

In still another possible implementation, the semi-persistent signal includes a semi-persistent CSI-RS and a semi-persistent SRS. The periodic signal includes one or more of an SSB, an SIB, a PRACH, a periodic CSI-RS, a periodic SRS, a CG PUSCH, and an SPS PDSCH.

In still another possible implementation, the first information indicates at least one of a first cycle, first starting time, first closing time, starting duration, or closing duration. The first starting time is a start moment of the second time period in the first cycle, the first closing time is a start moment of the first time period in the first cycle, the starting duration is duration of the second time period, and the closing duration is duration of the first time period. Therefore, the solution is more compatible with the current technology.

**According to a second aspect,** this application provides a communication method. The communication method may be performed by a terminal apparatus. The terminal apparatus in this application may be a terminal device, or a chip, a unit, or a module inside a terminal device. Alternatively, the terminal apparatus may be a communication apparatus having a function of a terminal device, or a chip, a unit, or a module inside a communication apparatus having a function of a terminal device. For example, the terminal apparatus is a network device that may be considered as a terminal device, or a chip, a unit, or a module inside a network device that may be considered as a terminal device.

The method includes: The terminal apparatus receives first information from the network apparatus, where the first information indicates that transmission of a first type of channel is allowed in a first time period; and the terminal apparatus transmits the first type of channel in the first time period based on the first information.

Transmission of the first type of channel is allowed in the first time period. On one hand, some requirements of the terminal apparatus and the network apparatus can be met. On the other hand, because the type of the channel that is allowed to be transmitted in the first time period is limited, the terminal apparatus and/or the network apparatus do/does not need to transmit a large quantity of channels in the first time period. To be specific, a quantity of channels transmitted by the terminal apparatus and/or the network apparatus in the first time period is reduced. This can reduce power consumption of the terminal apparatus and/or the network apparatus.

In a possible implementation, after receiving the first information from the network apparatus, the terminal apparatus, based on the first information, skips transmitting a non-first-type of channel in the first time period.

Because transmission of the non-first-type of channel is not allowed in the first time period, a quantity of channels transmitted by the terminal apparatus and/or the network apparatus in the first time period can be reduced. This reduces power consumption of the terminal apparatus and/or the network apparatus.

In this application, when the network apparatus and/or the terminal apparatus are/is configured with a DRX mechanism of the network apparatus, a channel type included in the first type is an uplink channel type. It can be learned that, in the DRX mechanism of the network apparatus, a type of an uplink channel transmitted between the terminal apparatus and the network apparatus can be controlled, so that a quantity of channels transmitted by the terminal apparatus and/or the network apparatus in the first time period can be reduced. This can reduce power consumption of the terminal apparatus and/or the network apparatus.

When the channel type included in the first type includes the uplink channel type, the first type includes one or more of a CG PUSCH, a HARQ-ACK for an SPS PDSCH, an SR, a PRACH, and a random access message 3.

In still another possible implementation, the network apparatus and/or the terminal apparatus may be configured with a DTX mechanism of the network apparatus. A channel type included in the first type is a downlink channel type. It can be learned that, in the DRX mechanism of the network apparatus, a type of a downlink channel transmitted between the terminal apparatus and the network apparatus can be controlled, so that a quantity of channels transmitted by the terminal apparatus and/or the network apparatus in the first time period can be reduced. This can reduce power consumption of the terminal apparatus and/or the network apparatus.

When the channel type included in the first type includes the downlink channel type, the first type includes one or more of a PDCCH of a radio network temporary identifier for a network power saving cell, a PDCCH scrambled by a power saving radio network temporary identifier PS-RNTI, a synchronization signal/physical broadcast channel block SSB, system information, a paging message, a random access message 2, a random access message 4, a random access message B, beam failure recovery BFR, and a semi-persistent scheduling physical downlink shared channel SPS PDSCH.

In still another possible implementation, the network apparatus and/or the terminal apparatus may be configured with the DTX mechanism of the network apparatus and the DRX mechanism of the network apparatus. A channel type included in the first type includes a downlink channel type and an uplink channel type. It can be learned that, in the DRX mechanism of the network apparatus, a type of a downlink channel and a type of an uplink channel that are transmitted between the terminal apparatus and the network apparatus can be controlled, so that a quantity of channels transmitted by the terminal apparatus and/or the network apparatus in the first time period can be reduced. This can reduce power consumption of the terminal apparatus and/or the network apparatus.

In a possible implementation, the first information further indicates that uplink channel transmission and/or downlink channel transmission are/is allowed in a second time period. When the first information further indicates that the uplink channel transmission is allowed in the second time period, the terminal apparatus sends the uplink channel in the second time period. When the first information further indicates that the downlink channel transmission is allowed in the second time period, the terminal apparatus receives the downlink channel in the second time period.

The second time period may be considered as a time period in active time or active time in one cycle in the DRX mechanism of the network apparatus and/or the DTX mechanism of the network apparatus. Because the uplink channel transmission and/or downlink channel transmission is allowed in the second time period, the terminal apparatus may perform channel transmission in the second time period based on the first information, to meet a service requirement of the terminal apparatus.

For example, the network apparatus and/or the terminal apparatus are/is configured with the DRX mechanism of the network apparatus, and the first time period and the second time period are two time periods in one cycle in the DRX mechanism of the network apparatus. There is no intersection of the second time period and the first time period in one cycle. In a possible implementation, a union set of the first time period and the second time period may be a universal set of one cycle in the DRX mechanism of the network apparatus.

In a possible implementation, when a preset first condition is met, the terminal apparatus transmits a second type of channel in a third time period that is in the first time period.

In this way, flexibility of the solution may be improved to meet some temporary requirements of the terminal apparatus. In addition, compared with a solution in which the terminal apparatus is allowed to transmit all types of channels in the third time period, this solution can limit a type of a channel that can be transmitted by the terminal apparatus, to reduce a quantity of channels that need to be sent by the terminal apparatus, so as to reduce power consumption of the terminal apparatus.

In a possible implementation, the first time period and the second time period are two time periods in one cycle, and the second time period is before the first time period. The first condition includes one or more of the following: in the second time period, indication information for scheduling downlink data or uplink data transmission is received; in the second time period, indication information for activating an aperiodic signal is received; in the second time period, information indicating to start a first timer is received, where an intersection of a time period indicated by the first timer and the first time period is the third time period; or a preset type of uplink channel is sent in the second time period.

If the foregoing condition is met, it indicates that the terminal apparatus may have a requirement for transmitting a channel in next time. Therefore, in this application, time in which channel transmission is allowed is extended. For example, a part of the first time period (for example, the third time period in the first time period) is also used as time in which channel transmission can be performed. The terminal apparatus performs channel transmission in the extended time period, for example, transmits the second type of channel in the third time period. In this way, a requirement of the terminal apparatus can be met.

For example, after the first condition is met, the terminal apparatus may not start the first timer, or may start the first timer. For example, the terminal apparatus may start the first timer when the first condition is met, where start time of the first timer is before the second time period expires. There is the intersection of the time indicated by the first timer and the first time period, and the intersection is the third time period. Duration of the first timer may be configured by the network apparatus by using signaling or may be preset.

The second type of channel may be the uplink channel, or may be the downlink channel, or may include the uplink channel and the downlink channel. For related content of the second type, refer to related descriptions in the first aspect and any possible implementation of the first aspect. Details are not described herein again.

In still another possible implementation, the first information indicates at least one of a first cycle, first starting time, first closing time, starting duration, or closing duration. The first starting time is a start moment of the second time period in the first cycle, the first closing time is a start moment of the first time period in the first cycle, the starting duration is duration of the second time period, and the closing duration is duration of the first time period. Therefore, the solution is more compatible with the current technology.

**According to a third aspect,** this application provides a communication method. The communication method may be performed by a terminal apparatus. The terminal apparatus in this application may be a terminal device, or a chip, a unit, or a module inside a terminal device. Alternatively, the terminal apparatus may be a communication apparatus having a function of a terminal device, or a chip, a unit, or a module inside a communication apparatus having a function of a terminal device. For example, the terminal apparatus is a network device that may be considered as a terminal device, or a chip, a unit, or a module inside a network device that may be considered as a terminal device.

In the method, the terminal apparatus receives first information from the network apparatus. The first information indicates that transmission of a first channel is not allowed in a first time period, or the first information indicates that transmission of a first type of channel is allowed in a first time period. The terminal apparatus receives second information from the network apparatus, where the second information indicates that uplink channel transmission and downlink channel transmission are allowed in a fourth time period, and time of the fourth time period is DRX active time of the terminal apparatus. When there is an intersection of the fourth time period and the first time period, the terminal apparatus performs one of the following in the intersection of the fourth time period and the first time period: skipping sending all uplink channels and/or skipping receiving all downlink channels; transmitting the first type of channel; transmitting a second type of channel; transmitting the second type of channel and the first type of channel; or sending all uplink channels and/or receiving all downlink channels.

The first time period may be inactive time in a DTX mechanism of the network apparatus. The time of the fourth time period is the DRX active time of the terminal apparatus. When there is an intersection of the fourth time period and the first time period, it may be understood that active time in a DRX mechanism of the terminal apparatus overlaps the inactive time in the DTX mechanism of the network apparatus. According to the foregoing solution, a conflict problem caused by overlapping of the active time in the DRX mechanism of the terminal apparatus and the inactive time in the DTX mechanism of the network apparatus can be resolved.

For related content of the first type and the second type, refer to related descriptions in the first aspect and any possible implementation of the first aspect, and in the second aspect and any possible implementation of the second aspect. Details are not described herein again.

In a possible implementation, the first information further indicates that uplink channel transmission and/or downlink channel transmission are/is allowed in a second time period. The second information further indicates a fifth time period, and time of the fifth time period is DRX inactive time of the terminal apparatus. When there is an intersection of the fifth time period and the second time period, the terminal apparatus performs one of the following in the intersection of the fifth time period and the second time period: transmitting the first type of channel, transmitting the first type of channel and the second type of channel, or sending the uplink channel and/or receiving the downlink channel.

**According to a fourth aspect,** this application provides a communication method. The communication method may be performed by a network apparatus. The network apparatus in this application may be a network device, or may be a chip, a unit, or a module inside a network device. Alternatively, the network apparatus may be a communication apparatus having a network device function, or a chip, a unit, or a module inside a communication apparatus having a network device function.

The method includes: The network apparatus sends first information to a terminal apparatus, where the first information indicates that transmission of a first channel is not allowed in a first time period, and the first channel includes all uplink channels and/or all downlink channels. The network apparatus skips transmitting the first channel in the first time period.

Because the first information indicates the network apparatus not to transmit the first channel in the first time period, the terminal apparatus may not transmit the first channel in the first time period, so that power consumption of the network apparatus can be reduced, and power consumption of the terminal apparatus can also be reduced.

In a possible implementation, the first information further indicates that uplink channel transmission and/or downlink channel transmission are/is allowed in a second time period. When the first information indicates that the uplink channel transmission is allowed in the second time period, the network apparatus sends the uplink channel in the second time period. When the first information indicates that the downlink channel transmission is allowed in the second time period, the network apparatus receives the downlink channel in the second time period.

The second time period may be considered as a time period in active time or active time in one cycle in a DRX mechanism of the network apparatus and/or a DTX mechanism of the network apparatus. Because the uplink channel transmission and/or downlink channel transmission is allowed in the second time period, the terminal apparatus may perform channel transmission in the second time period based on the first information, to meet a service requirement of the terminal apparatus.

For example, the network apparatus and/or the terminal apparatus are/is configured with the DRX mechanism of the network apparatus, and the first time period and the second time period are two time periods in one cycle in the DRX mechanism of the network apparatus. There is no intersection of the second time period and the first time period in one cycle. In a possible implementation, a union set of the first time period and the second time period may be a universal set of one cycle in the DRX mechanism of the network apparatus.

In a possible implementation, when a preset second condition is met, the network apparatus transmits a second type of channel in a third time period that is in the first time period.

In this way, flexibility of the solution may be improved to meet some temporary requirements of the terminal apparatus. In addition, compared with a solution in which the terminal apparatus is allowed to transmit all types of channels in the third time period, this solution can limit a type of a channel that can be transmitted by the terminal apparatus, to reduce a quantity of channels that need to be sent by the terminal apparatus, so as to reduce power consumption of the terminal apparatus.

In a possible implementation, the first time period and the second time period are two time periods in one cycle, and the second time period is before the first time period. The second condition includes one or more of the following: in the second time period, indication information for scheduling downlink data or uplink data transmission is sent; in the second time period, indication information for activating an aperiodic signal is sent; in the second time period, information indicating to start a first timer is sent, where an intersection of a time period indicated by the first timer and the first time period is the third time period; or a preset type of uplink channel received in the second time period.

If the foregoing condition is met, it indicates that the terminal apparatus may have a requirement for transmitting a channel in next time. Therefore, in this application, time in which channel transmission is allowed is extended. For example, a part of the first time period (for example, the third time period in the first time period) is also used as time in which channel transmission can be performed. The terminal apparatus performs channel transmission in the extended time period, for example, transmits the second type of channel in the third time period. In this way, a requirement of the terminal apparatus can be met.

For example, after the second condition is met, the terminal apparatus may not start the timer, or may start the timer. For example, the terminal apparatus may start the timer when the second condition is met, and start time of the timer is before the second time period expires. There is the intersection of the time indicated by the timer and the first time period, and the intersection is the third time period. Duration of the timer may be configured by the network apparatus by using signaling or may be preset.

In this application, when the network apparatus and/or the terminal apparatus are/is configured with the DRX mechanism of the network apparatus, a channel type included in the second type is an uplink channel type. It can be learned that, in the DRX mechanism of the network apparatus, a type of an uplink channel transmitted between the terminal apparatus and the network apparatus can be controlled, so that a quantity of channels transmitted by the terminal apparatus and/or the network apparatus in the first time period can be reduced. This can reduce power consumption of the terminal apparatus and/or the network apparatus.

When the channel type included in the second type includes the uplink channel type, the second type may include one or more of an uplink channel corresponding to a first PDCCH or a configured granted CG PUSCH.

In still another possible implementation, the network apparatus and/or the terminal apparatus may be configured with the DTX mechanism of the network apparatus. A channel type included in the second type is a downlink channel type. It can be learned that, in the DRX mechanism of the network apparatus, a type of a downlink channel transmitted between the terminal apparatus and the network apparatus can be controlled, so that a quantity of channels transmitted by the terminal apparatus and/or the network apparatus in the first time period can be reduced. This can reduce power consumption of the terminal apparatus and/or the network apparatus.

When the channel type included in the second type includes the downlink channel type, the second type may include one or more of a PDCCH, a downlink channel corresponding to a second PDCCH, a periodic CSI-RS, a semi-persistent CSI-RS, and an SPS PDSCH. The PDCCH is a PDCCH received/detected in the second time period and/or the third time period, and the PDCCH includes the first PDCCH and/or the second PDCCH.

In a possible implementation, the uplink channel corresponding to the first PDCCH includes one or more of a channel sounding reference signal SRS, a physical uplink shared channel PUSCH, a configured grant CG-PUSCH, a PUCCH carrying aperiodic CSI, and a PUSCH carrying aperiodic CSI. The downlink channel corresponding to the second PDCCH includes one or more of a physical downlink shared channel, an SPS PDSCH, and an aperiodic CSI-RS.

In another possible implementation, the first PDCCH includes one or more of a PDCCH scrambled by a C-RNTI, a PDCCH scrambled by a CS-RNTI, a PDCCH scrambled by an MCS-C-RNT, and a PDCCH scrambled by an SP-CSI-RNTI. The second PDCCH includes one or more of a PDCCH scrambled by a C-RNTI, a PDCCH scrambled by a CS-RNTI, and a PDCCH scrambled by an MCS-C-RNT.

In still another possible implementation, the network apparatus and/or the terminal apparatus may be configured with the DTX mechanism of the network apparatus and the DRX mechanism of the network apparatus. A channel type included in the second type includes a downlink channel type and an uplink channel type. It can be learned that, in the DRX mechanism of the network apparatus, a type of a downlink channel and a type of an uplink channel that are transmitted between the terminal apparatus and the network apparatus can be controlled, so that a quantity of channels transmitted by the terminal apparatus and/or the network apparatus in the first time period can be reduced. This can reduce power consumption of the terminal apparatus and/or the network apparatus.

In still another possible implementation, the semi-persistent signal includes a semi-persistent CSI-RS and a semi-persistent SRS. The periodic signal includes one or more of an SSB, an SIB, a PRACH, a periodic CSI-RS, a periodic SRS, a CG PUSCH, and an SPS PDSCH.

**According to a fifth aspect,** this application provides a communication method. The communication method may be performed by a network apparatus. The network apparatus in this application may be a network device, or may be a chip, a unit, or a module inside a network device. Alternatively, the network apparatus may be a communication apparatus having a function of a network device or a chip, a unit, or a module inside a communication apparatus having a function of a network device. For example, the network apparatus is a terminal device that may be considered as a network device, or a chip, a unit, or a module inside a terminal device that may be considered as a network device.

In the method, the network apparatus sends first information to the terminal apparatus, where the first information indicates that the network apparatus is allowed to transmit a first type of channel in a first time period. The network apparatus transmits the first type of channel in the first time period.

Transmission of the first type of channel is allowed in the first time period. On one hand, some requirements of the terminal apparatus and the network apparatus can be met. On the other hand, because the type of the channel that is allowed to be transmitted in the first time period is limited, the terminal apparatus and/or the network apparatus do/does not need to transmit a large quantity of channels in the first time period. To be specific, a quantity of channels transmitted by the terminal apparatus and/or the network apparatus in the first time period is reduced. This can reduce power consumption of the terminal apparatus and/or the network apparatus.

In a possible implementation, the network apparatus skips transmitting a non-first-type of channel in the first time period. Because transmission of the non-first-type of channel is not allowed in the first time period, a quantity of channels transmitted by the terminal apparatus and/or the network apparatus in the first time period can be reduced. This reduces power consumption of the terminal apparatus and/or the network apparatus.

In this application, when the network apparatus and/or the terminal apparatus are/is configured with a DRX mechanism of the network apparatus, a channel type included in the first type is an uplink channel type. It can be learned that, in the DRX mechanism of the network apparatus, a type of an uplink channel transmitted between the terminal apparatus and the network apparatus can be controlled, so that a quantity of channels transmitted by the terminal apparatus and/or the network apparatus in the first time period can be reduced. This can reduce power consumption of the terminal apparatus and/or the network apparatus.

When the channel type included in the first type includes the uplink channel type, the first type includes one or more of a CG PUSCH, a HARQ-ACK for an SPS PDSCH, an SR, a PRACH, and a random access message 3.

In still another possible implementation, the network apparatus and/or the terminal apparatus may be configured with a DTX mechanism of the network apparatus. A channel type included in the first type is a downlink channel type. It can be learned that, in the DRX mechanism of the network apparatus, a type of a downlink channel transmitted between the terminal apparatus and the network apparatus can be controlled, so that a quantity of channels transmitted by the terminal apparatus and/or the network apparatus in the first time period can be reduced. This can reduce power consumption of the terminal apparatus and/or the network apparatus.

When the channel type included in the first type includes the downlink channel type, the first type includes one or more of a PDCCH of a radio network temporary identifier for a network power saving cell, a PDCCH scrambled by a power saving radio network temporary identifier PS-RNTI, a synchronization signal/physical broadcast channel block SSB, system information, a paging message, a random access message 2, a random access message 4, a random access message B, beam failure recovery BFR, and a semi-persistent scheduling physical downlink shared channel SPS PDSCH.

In still another possible implementation, the network apparatus and/or the terminal apparatus may be configured with the DTX mechanism of the network apparatus and the DRX mechanism of the network apparatus. A channel type included in the first type includes a downlink channel type and an uplink channel type. It can be learned that, in the DRX mechanism of the network apparatus, a type of a downlink channel and a type of an uplink channel that are transmitted between the terminal apparatus and the network apparatus can be controlled, so that a quantity of channels transmitted by the terminal apparatus and/or the network apparatus in the first time period can be reduced. This can reduce power consumption of the terminal apparatus and/or the network apparatus.

In a possible implementation, the first information further indicates that uplink channel transmission and/or downlink channel transmission are/is allowed in a second time period. When the first information indicates that the uplink channel transmission is allowed in the second time period, the network apparatus sends the uplink channel in the second time period. When the first information indicates that the downlink channel transmission is allowed in the second time period, the network apparatus receives the downlink channel in the second time period.

The second time period may be considered as a time period in active time or active time in one cycle in the DRX mechanism of the network apparatus and/or the DTX mechanism of the network apparatus. Because the uplink channel transmission and/or downlink channel transmission is allowed in the second time period, the terminal apparatus may perform channel transmission in the second time period based on the first information, to meet a service requirement of the terminal apparatus.

For example, the network apparatus and/or the terminal apparatus are/is configured with the DRX mechanism of the network apparatus, and the first time period and the second time period are two time periods in one cycle in the DRX mechanism of the network apparatus. There is no intersection of the second time period and the first time period in one cycle. In a possible implementation, a union set of the first time period and the second time period may be a universal set of one cycle in the DRX mechanism of the network apparatus.

In a possible implementation, when a preset second condition is met, the network apparatus transmits a second type of channel in a third time period that is in the first time period.

In this way, flexibility of the solution may be improved to meet some temporary requirements of the terminal apparatus. In addition, compared with a solution in which the terminal apparatus is allowed to transmit all types of channels in the third time period, this solution can limit a type of a channel that can be transmitted by the terminal apparatus, to reduce a quantity of channels that need to be sent by the terminal apparatus, so as to reduce power consumption of the terminal apparatus.

In a possible implementation, the first time period and the second time period are two time periods in one cycle, and the second time period is before the first time period. The second condition includes one or more of the following: in the second time period, indication information for scheduling downlink data or uplink data transmission is sent; in the second time period, indication information for activating an aperiodic signal is sent; in the second time period, information indicating to start a first timer is sent, where an intersection of a time period indicated by the first timer and the first time period is the third time period; or a preset type of uplink channel received in the second time period.

If the foregoing condition is met, it indicates that the terminal apparatus may have a requirement for transmitting a channel in next time. Therefore, in this application, time in which channel transmission is allowed is extended. For example, a part of the first time period (for example, the third time period in the first time period) is also used as time in which channel transmission can be performed. The terminal apparatus performs channel transmission in the extended time period, for example, transmits the second type of channel in the third time period. In this way, a requirement of the terminal apparatus can be met.

For example, after the second condition is met, the terminal apparatus may not start the timer, or may start the timer. For example, the terminal apparatus may start the timer when the second condition is met, and start time of the timer is before the second time period expires. There is the intersection of the time indicated by the timer and the first time period, and the intersection is the third time period. Duration of the timer may be configured by the network apparatus by using signaling or may be preset.

The second type of channel may be the uplink channel, or may be the downlink channel, or may include the uplink channel and the downlink channel. For related content of the second type, refer to related descriptions in the fourth aspect and any possible implementation of the fourth aspect. Details are not described herein again.

In still another possible implementation, the first information indicates at least one of a first cycle, first starting time, first closing time, starting duration, or closing duration. The first starting time is a start moment of the second time period in the first cycle, the first closing time is a start moment of the first time period in the first cycle, the starting duration is duration of the second time period, and the closing duration is duration of the first time period. Therefore, the solution is more compatible with the current technology.

**According to a sixth aspect,** this application provides a communication method. The communication method may be performed by a network apparatus. The network apparatus in this application may be a network device, or may be a chip, a unit, or a module inside a network device. Alternatively, the network apparatus may be a communication apparatus having a function of a network device or a chip, a unit, or a module inside a communication apparatus having a function of a network device. For example, the network apparatus is a terminal device that may be considered as a network device, or a chip, a unit, or a module inside a terminal device that may be considered as a network device.

In the method, the network apparatus sends first information to the terminal apparatus. The first information indicates that transmission of a first channel is not allowed in a first time period, or the first information indicates that transmission of a first type of channel is allowed in a first time period. The network apparatus sends second information to the terminal device, where the second information indicates that uplink channel transmission and downlink channel transmission are allowed in a fourth time period, and the fourth time period is DRX active time of the terminal apparatus. When there is an intersection of the fourth time period and the first time period, the network apparatus performs one of the following in the intersection of the fourth time period and the first time period: skipping receiving all uplink channels and/or skipping sending all downlink channels; transmitting the first type of channel; transmitting a second type of channel; transmitting the second type of channel and the first type of channel; or receiving all uplink channels and/or sending all downlink channels.

For related content of the first type and the second type, refer to related descriptions in the fourth aspect and any possible implementation of the fourth aspect, and in the fifth aspect and any possible implementation of the fifth aspect. Details are not described herein again.

The first time period may be inactive time in a DTX mechanism of the network apparatus. The time of the fourth time period is the DRX active time of the terminal apparatus. When there is an intersection of the fourth time period and the first time period, it may be understood that active time in a DRX mechanism of the terminal apparatus overlaps the inactive time in the DTX mechanism of the network apparatus. According to the foregoing solution, a conflict problem caused by overlapping of the active time in the DRX mechanism of the terminal apparatus and the inactive time in the DTX mechanism of the network apparatus can be resolved.

In a possible implementation, the first information further indicates that uplink channel transmission and/or downlink channel transmission are/is allowed in a second time period. The second information further indicates a fifth time period, and the fifth time period is discontinuous reception DRS inactive time of the terminal apparatus. When there is an intersection of the fifth time period and the second time period, the network apparatus performs one of the following in the intersection of the fifth time period and the second time period: transmitting the first type of channel, transmitting the first type of channel and the second type of channel, or sending the uplink channel and/or receiving the downlink channel.

In still another possible implementation, the first information indicates at least one of a first cycle, first starting time, first closing time, starting duration, or closing duration. The first starting time is a start moment of the second time period in the first cycle, the first closing time is a start moment of the first time period in the first cycle, the starting duration is duration of the second time period, and the closing duration is duration of the first time period. Therefore, the solution is more compatible with the current technology.

**According to a seventh aspect,** a communication apparatus is provided. The communication apparatus may be the foregoing network apparatus or terminal apparatus. The communication apparatus may include a communication unit and a processing unit, to perform any one of the first aspect to the sixth aspect, or perform any one of the possible implementations of the first aspect to the sixth aspect. The communication unit is configured to perform functions related to sending and receiving. Optionally, the communication unit includes a receiving unit and a sending unit. In a design, the communication apparatus is a communication chip, the processing unit may be one or more processors or processor cores, and the communication unit may be an input/output circuit or a port of the communication chip.

In another design, the communication unit may be a transmitter and a receiver, or the communication unit may be a transmitter machine and a receiver machine.

Optionally, the communication apparatus further includes modules that may be configured to perform any one of the first aspect to the sixth aspect, or perform any one of the possible implementations of the first aspect to the sixth aspect.

**According to an eighth aspect,** a communication apparatus is provided. The communication apparatus may be the foregoing network apparatus or terminal apparatus. The communication apparatus may include a processor and a memory, to perform any one of the first aspect to the sixth aspect, or perform any one of the possible implementations of the first aspect to the sixth aspect. Optionally, the communication apparatus further includes a transceiver. The memory is configured to store a computer program or instructions. The processor is configured to invoke the computer program or the instructions from the memory and run the computer program or the instructions. When the processor executes the computer program or the instructions in the memory, the communication apparatus is enabled to perform any one of the first aspect to the sixth aspect, perform any possible implementation of the first aspect to the sixth aspect.

Optionally, there are one or more processors, and there are one or more memories.

Optionally, the memory may be integrated with the processor, or the memory and the processor are disposed separately.

Optionally, the transceiver may include a transmitter machine (transmitter) and a receiver machine (receiver).

**According to a ninth aspect,** a communication apparatus is provided. The communication apparatus may be the foregoing network apparatus or terminal apparatus. The communication apparatus may include a processor, to perform any one of the first aspect to the sixth aspect, or perform any one of the possible implementations of the first aspect to the sixth aspect. The processor is coupled to a memory. Optionally, the communication apparatus further includes the memory. Optionally, the communication apparatus further includes a communication interface, and the processor is coupled to the communication interface.

In an implementation, when the communication apparatus is a network apparatus or a terminal apparatus, the communication interface may be a transceiver or an input/output interface. Optionally, the transceiver may be a transceiver circuit. Optionally, the input/output interface may be an input/output circuit.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

**According to a tenth aspect,** a system is provided. The system includes the foregoing one or more network apparatuses.

In a possible implementation, the system may further include one or more terminal devices, for example, may include the foregoing terminal apparatus.

**According to an eleventh aspect,** a computer program product is provided. The computer program product includes a computer program (which may also be referred to as code or instructions). When the computer program is run, a computer is enabled to perform any one of the first aspect to the sixth aspect, or perform any one of the possible implementations of the first aspect to the sixth aspect.

**According to a twelfth aspect,** a computer-readable storage medium is provided. The computer-readable storage medium stores a computer program (which may also be referred to as code or instructions). When the computer program is run on a computer, the computer is enabled to perform any one of the first aspect to the sixth aspect, or perform any one of the possible implementations of the first aspect to the sixth aspect.

**According to a thirteenth aspect,** a chip system is provided. The chip system may include a processor. The processor is coupled to a memory, and may be configured to perform any one of the first aspect to the sixth aspect, or perform any one of the possible implementations of the first aspect to the sixth aspect. Optionally, the chip system further includes the memory. The memory is configured to store a computer program (which may also be referred to as code or instructions). The processor is configured to: invoke the computer program from the memory and run the computer program, so that a device in which the chip system is installed performs any one of the first aspect to the sixth aspect, or performs any one of the possible implementations of the first aspect to the sixth aspect.

**According to a fourteenth aspect,** a processing apparatus is provided, including an interface circuit and a processing circuit. The interface circuit may include an input circuit and an output circuit. The processing circuit is configured to: receive a signal by using the input circuit, and transmit a signal by using the output circuit, so that any one of the first aspect to the sixth aspect or any one of the possible implementations of the first aspect to the sixth aspect is implemented.

In a specific implementation process, the processing apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

In an implementation, when the communication apparatus is a network apparatus or a terminal apparatus. The interface circuit may be a radio frequency processing chip in the network apparatus or the terminal apparatus, and the processing circuit may be a baseband processing chip in the network apparatus or the terminal apparatus.

In another implementation, the communication apparatus may be some components in a network apparatus or a terminal apparatus, for example, an integrated circuit product like a system chip or a communication chip. The interface circuit may be an input/output interface, an interface circuit, an output circuit, an input circuit, a pin, a related circuit, or the like on a chip or a chip system. The processing circuit may be a logic circuit on the chip.

**According to a fifteenth aspect,** a communication system is provided, including at least one of the foregoing terminal apparatuses and at least one of the foregoing network apparatuses.

According to a sixteenth aspect, a communication method is provided, including: A network apparatus sends first information; and a terminal apparatus receives the first information from the network apparatus, where the first information indicates that transmission of a first channel is not allowed in a first time period, and the first channel includes all uplink channels and/or all downlink channels. The network apparatus skips transmitting the first channel in the first time period, and the terminal apparatus, based on the first information, skips transmitting the first channel in the first time period.

For an optional implementation of the sixteenth aspect, refer to related descriptions of the first aspect and the fourth aspect.

### BRIEF DESCRIPTION OF DRAWINGS

FIG. 1 is a diagram of an architecture of a communication system to which an embodiment of this application is applicable;
FIG. 2 is a diagram of a DRX mechanism of a terminal device according to an embodiment of this application;
FIG. 3 is a diagram of a DRX mechanism of a terminal device according to an embodiment of this application;
FIG. 4 is a schematic flowchart of a communication method according to an embodiment of this application;
FIG. 5 is a diagram of a possible relationship between a first time period and a second time period according to an embodiment of this application;
FIG. 6 is a diagram of a possible relationship between a first time period, a second time period, and a third time period according to an embodiment of this application;
FIG. 7 is a diagram of another possible relationship between a first time period, a second time period, and a third time period according to an embodiment of this application;
FIG. 8 is a schematic flowchart of another communication method according to an embodiment of this application;
FIG. 9 is a schematic flowchart of still another communication method according to an embodiment of this application;
FIG. 10 shows an example of one cycle in a DRX mechanism of a terminal apparatus and one cycle in a DTX mechanism of a network apparatus according to an embodiment of this application;
FIG. 11 is a diagram of a structure of a communication apparatus according to an embodiment of this application; and
FIG. 12 is a diagram of a structure of another communication apparatus according to an embodiment of this application.

### DESCRIPTION OF EMBODIMENTS

The technical solutions of embodiments of this application may be used in various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WIMAX) communication system, and a fifth generation (5th generation, 5G) system or a new radio (new radio, NR) system, or is used in a future communication system or another similar communication system.

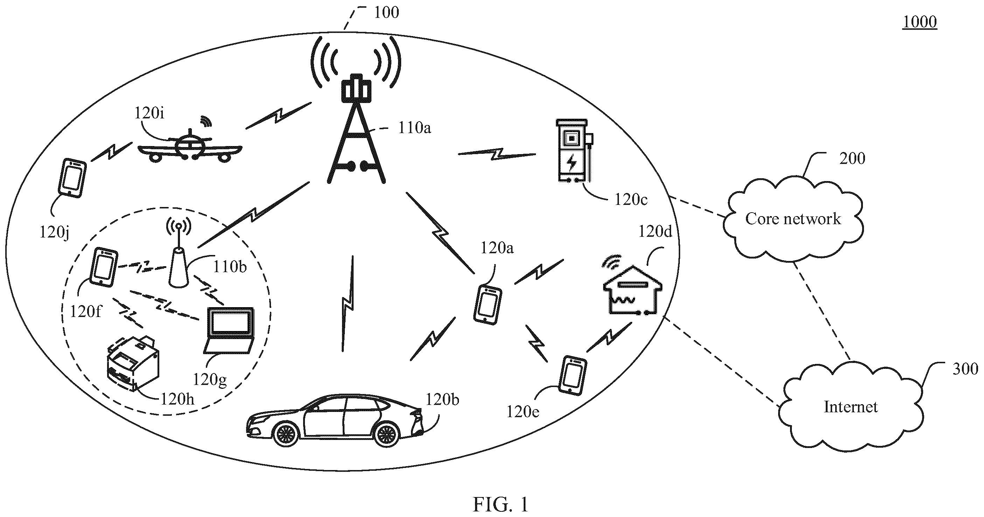

The solutions provided in embodiments of this application may be applied to a communication system 1000 shown in FIG. 1. As shown in FIG. 1, the communication system 1000 includes a radio access network 100 and a core network 200. Both the radio access network 100 and the core network 200 may be connected to an internet 300. The radio access network 100 may include at least one access network device (for example, 110a and 110b in FIG. 1, which are collectively referred to as 110), and may further include at least one terminal (for example, a terminal 120a, a terminal 120b, a terminal 120c, a terminal 120d, a terminal 120e, a terminal 120f, a terminal 120g, a terminal 120h, a terminal 120i, and a terminal 120j in FIG. 1, which are collectively referred to as a terminal 120). The terminal 120a to the terminal 120j are connected to the access network device 110a and the access network device 110b in a wireless manner. The access network device 110a and the access network device 110b are connected to the core network 200 in a wireless or wired manner. The core network device in a core network and the access network device in a radio access network may be different physical devices, or may be a same physical device that integrates a logical function of the core network and a logical function of the radio access network. Terminals may be connected to each other in a wireless manner. Access network devices may be connected to each other in a wired or wireless manner. FIG. 1 is merely a diagram for illustration. The communication system may further include another network device, for example, a wireless relay device and/or a wireless backhaul device (not shown in FIG. 1).

The communication system 1000 may support, for example, a cellular system related to the 3rd Generation Partnership Project (3rd generation partnership project, 3GPP) (for example, a 5G communication system, a communication system integrating a plurality of wireless technologies (for example, a communication system integrating at least two of 2G, 3G, 4G, or 5G technologies), or a future-oriented evolved system (for example, a 6G access technology)), a wireless fidelity (wireless fidelity, Wi-Fi) system, a communication system integrating a 3GPP-related cellular system with another technology, or a future communication system.

The access network device in embodiments of this application is sometimes also referred to as an access node. The access network device has a wireless transceiver function, and is configured to communicate with a terminal. The access network device includes but is not limited to a base station (base station) in the foregoing communication system, an evolved NodeB (evolved NodeB, eNodeB), a transmission reception point (transmission reception point, TRP), a next generation NodeB (next generation NodeB, gNB) in a 5G mobile communication system, a next generation base station in a 6th generation (6th generation, 6G) mobile communication system, an access network device or a module of an access network device in an open access network ORAN (open RAN, ORAN) system, a base station in a future mobile communication system, an access node in a Wi-Fi system, or the like. Alternatively, the access network device may be a module or a unit that can implement some functions of the base station. For example, the access network device may be a central unit (central unit, CU), a distributed unit (distributed unit, DU), a CU-control plane (control plane, CP), a CU-user plane (user plane, UP), a radio unit (radio unit, RU), or the like described below. In the ORAN system, the CU may also be referred to as an O-CU, the DU may also be referred to as an open (open, O)-DU, the CU-CP may also be referred to as an O-CU-CP, the CU-UP may also be referred to as an O-CUP-UP, and the RU may also be referred to as an O-RU. The access network device may be a macro base station (for example, 110a in FIG. 1), a micro base station or an indoor station (for example, 110b in FIG. 1), a relay node or a donor node, or a radio controller in a cloud radio access network (cloud radio access network, CRAN) scenario. Optionally, the access network device may alternatively be a server, a wearable device, a vehicle-mounted device, or the like. For example, the access network device in a vehicle to everything (vehicle to everything, V2X) technology may be a road side unit (road side unit, RSU). A plurality of access network devices in the communication system may be base stations of a same type, or may be base stations of different types. The base station may communicate with a terminal, or may communicate with the terminal through a relay station. The terminal may communicate with a plurality of base stations in different access technologies.

The terminal may also be referred to as a terminal device, user equipment (user equipment, UE), a mobile station, a mobile terminal, or the like. The terminal may be widely used in various communication scenarios, for example, may be used in device-to-device (device-to-device, D2D) communication, vehicle-to-everything (vehicle-to-everything, V2X) communication, machine-type communication (machine-type communication, MTC), internet of things (internet of things, IOT), virtual reality, augmented reality, industrial control, autonomous driving, telemedicine, smart grid, smart furniture, smart office, smart wearable, smart transportation, smart city, or the like. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A device form of the terminal is not limited in embodiments of this application.

The access network device and/or the terminal may be fixed, or may be movable. The access network device and the terminal may be deployed terrestrially, including an indoor device or an outdoor device, a handheld device, or a vehicle-mounted device; or may be deployed on the water; or may be deployed on an airplane, a balloon, and a satellite in the air. An application scenario of the access network device and the terminal is not limited in embodiments of this application. The access network device and the terminal device may be deployed in a same scenario or different scenarios. For example, the access network device and the terminal device are both deployed on the land; or the access network device is deployed on the land, and the terminal device is deployed on the water. Examples are not provided one by one.

In embodiments of this application, each element in the communication system may be considered as a network element in the communication system. For example, a helicopter or an uncrewed aerial vehicle (the terminal 120i) in FIG. 1 may be configured as a mobile access network device. For the terminal device 120j that accesses the radio access network 100 through the terminal 120i, the terminal 120i is an access network device. However, for the access network device 110a, the terminal 120i is a terminal device. In other words, the access network device 110a communicates with the terminal 120i by using a radio air interface protocol. The access network device 110a and the terminal 120i may alternatively communicate with each other by using an interface protocol between access network devices. In this case, compared with the access network device 110a, the terminal 120i is also an access network device. Therefore, both the access network device and the terminal device may be collectively referred to as a communication apparatus. The access network device 110a and the access network device 110b in FIG. 1 may be referred to as communication apparatuses having functions of the access network device, and the terminal 120a to the terminal 120j in FIG. 1 may be referred to as communication apparatuses having functions of the terminal device.

In embodiments of this application, the communication apparatus having the function of the access network device may be an access network device, a module (for example, a chip, a chip system, or a software module) in an access network device, or a control subsystem including the function of the access network device. For example, the control subsystem including the function of the access network device may be a control center in a scenario in which a terminal may be used, like a smart grid, industrial control, smart transportation, or a smart city.

In embodiments of this application, a communication apparatus having a terminal function may be a terminal, or a module (like a chip, a chip system, a modem, or a software model) in a terminal, or an apparatus including a terminal function. In embodiments of this application, for ease of description, the base station or the BS and the terminal or the UE are used as an example for description below.

Communication between the access network device and the terminal device may comply with a specific protocol layer structure. For example, the protocol layer structure may include a control plane protocol layer structure and a user plane protocol layer structure. For example, the control plane protocol layer structure may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, or the like. For example, the user plane protocol layer structure may include at least one of the following: a service data adaptation protocol (service data adaptation protocol, SDAP) layer, a PDCP layer, an RLC layer, a MAC layer, a physical layer, or the like.

The access network device may include a central unit (central unit, CU) and a distributed unit (distributed unit, DU). This design may be referred to as CU and DU separation. A plurality of DUs may be controlled by one CU in a centralized manner. For example, an interface between the CU and the DU is referred to as an F1 interface. A control plane (control plane, CP) interface may be F1-C, and a user plane (user plane, UP) interface may be F1-U. A specific name of each interface is not limited in embodiments of this application. Division may be performed for the CU and the DU based on protocol layers of a wireless network. For example, functions of the PDCP layer and protocol layers (such as the RRC layer and the SDAP layer) above the PDCP layer are set on the CU, and functions of protocol layers (such as the RLC layer, the MAC layer, and the PHY layer) below the PDCP layer are set on the DU. For another example, functions of protocol layers above the PDCP layer are set on the CU, and functions of the PDCP layer and protocol layers below the PDCP layer are set on the DU. This is not limited.

Processing function division of the CU and the DU based on protocol layers is merely an example, and there may be other division. For example, the CU or the DU may have functions of more protocol layers through division. For another example, the CU or the DU may have some processing functions of the protocol layers through division. For example, some functions of the RLC layer and functions of protocol layers above the RLC layer are set on the CU, and remaining functions of the RLC layer and functions of protocol layers below the RLC layer are set on the DU. In another example, division of functions of the CU or the DU may alternatively be performed based on service types or other system requirements. For example, division may be performed based on latencies. Functions whose processing time needs to satisfy a latency requirement are set on the DU, and functions whose processing time does not need to satisfy the latency requirement are set on the CU.

Optionally, the CU may have one or more functions of the core network.

Optionally, a radio unit (radio unit, RU) of the DU may be remotely disposed. The RU has a radio frequency function. For example, the DU and the RU may be divided at the PHY layer. For example, the DU may implement a higher-layer function of the PHY layer, and the RU may implement a lower-layer function of the PHY layer. When sending is performed, functions of the PHY layer may include at least one of the following: cyclic redundancy check (cyclic redundancy check, CRC) bit addition, channel coding, rate matching, scrambling, modulation, layer mapping, precoding, resource mapping, physical antenna mapping, or a radio frequency sending function. When receiving is performed, functions of the PHY layer may include at least one of the following: CRC check, channel decoding, rate de-matching, descrambling, demodulation, layer demapping, channel detection, resource demapping, physical antenna demapping, or a radio frequency receiving function. The higher-layer functions of the PHY layer may include a part of functions of the PHY layer. For example, the part of functions are closer to the MAC layer. The lower-layer functions of the PHY layer may include another part of functions of the PHY layer. For example, the part of functions are closer to a radio frequency function. For example, the higher-layer functions of the PHY layer may include adding a CRC bit, channel coding, rate matching, scrambling, modulation, and layer mapping, and the lower-layer functions of the PHY layer may include precoding, resource mapping, physical antenna mapping, and the radio frequency sending function. Alternatively, the higher-layer functions of the PHY layer may include adding a CRC bit, channel coding, rate matching, scrambling, modulation, layer mapping, and precoding, and the lower-layer functions of the PHY layer may include resource mapping, physical antenna mapping, and the radio frequency sending function. For example, the higher-layer function of the PHY layer may include CRC check, channel decoding, rate de-matching, decoding, demodulation, and layer demapping, and the lower-layer function of the PHY layer may include channel detection, resource demapping, physical antenna demapping, and radio frequency receiving functions. Alternatively, the higher-layer function of the PHY layer may include CRC check, channel decoding, rate de-matching, decoding, demodulation, layer demapping, and channel detection, and the lower-layer function of the PHY layer may include resource demapping, physical antenna demapping, and radio frequency receiving functions.

Optionally, functions of the CU may be further divided, and the control plane and the user plane are separated and implemented by using different entities. Separated entities are a control plane CU entity (namely, a CU-CP entity) and a user plane CU entity (namely, a CU-UP entity). The CU-CP entity and the CU-UP entity may be separately connected to the DU. In embodiments of this application, the entity may be understood as a module or a unit, and may exist in a form of a hardware structure, a software module, or a combination of a hardware structure and a software module. This is not limited.

Optionally, any one of the CU, the CU-CP, the CU-UP, the DU, and the RU may be a software module, a hardware structure, or a combination of the software module and the hardware structure. This is not limited. Different entities may exist in a same form or different forms. For example, the CU, the CU-CP, the CU-UP, and the DU are software modules, and the RU is a hardware structure. For brevity of description, all possible combination forms are not enumerated herein. These modules and methods performed by these modules also fall within the protection scope of embodiments of this application. For example, when the method in embodiments of this application is performed by the access network device, the method may be specifically performed by at least one of the CU, the CU-CP, the CU-UP, or the DU.

Embodiments of this application provide several possible communication methods. The communication methods are performed by a network apparatus and a terminal apparatus as an example for description. The network apparatus in embodiments of this application may be a network device, or a chip, a unit, or a module inside a network device. For example, the network apparatus may be the access network device 110a or the access network device 110b in FIG. 1. Alternatively, the network apparatus may be a communication apparatus having a network device function, or a chip, a unit, or a module inside a communication apparatus having a network device function. The terminal apparatus in embodiments of this application may be a terminal device, or a chip, a unit, or a module inside a terminal device, for example, may be any terminal 120 shown in FIG. 1. Alternatively, the terminal apparatus may be a communication apparatus having a function of a terminal device, or a chip, a unit, or a module inside a communication apparatus having a function of a terminal device. For ease of understanding, in embodiments of this application, an example in which the terminal apparatus is a terminal device or a chip, a unit, or a module inside a terminal device, and the network apparatus is a network device or a chip, a unit, or a module inside a network device is used for description.

To make objectives, technical solutions, and advantages of this application clearer, the following further describes this application in detail with reference to the accompanying drawings. A specific operation method in method embodiments may also be applied to apparatus embodiments or system embodiments.

The following describes some terms in embodiments of this application, to facilitate understanding of a person skilled in the art.

To make objectives, technical solutions, and advantages of this application clearer, the following further describes this application in detail with reference to the accompanying drawings. A specific operation method in method embodiments may also be applied to apparatus embodiments or system embodiments.

The following describes some terms in embodiments of this application, to facilitate understanding of a person skilled in the art.

### (1) DRX mechanism of a terminal apparatus

The terminal apparatus monitors a PDCCH to check whether there is DCI from a serving cell, to perform signal transmission with a network apparatus. In many cases, the terminal apparatus does not always perform effective information exchange with a network. In this case, if the terminal apparatus continuously monitors the PDCCH, relatively large power consumption is caused. To reduce power consumption of the terminal apparatus and ensure effective data transmission, a DRX mechanism is introduced in NR. The DRX mechanism may also be understood as a DRX mechanism of the terminal apparatus. The terminal apparatus may periodically monitor the PDCCH in some time periods by using the DRX mechanism, and does not monitor the PDCCH in another time period. This implements power saving of the terminal apparatus.

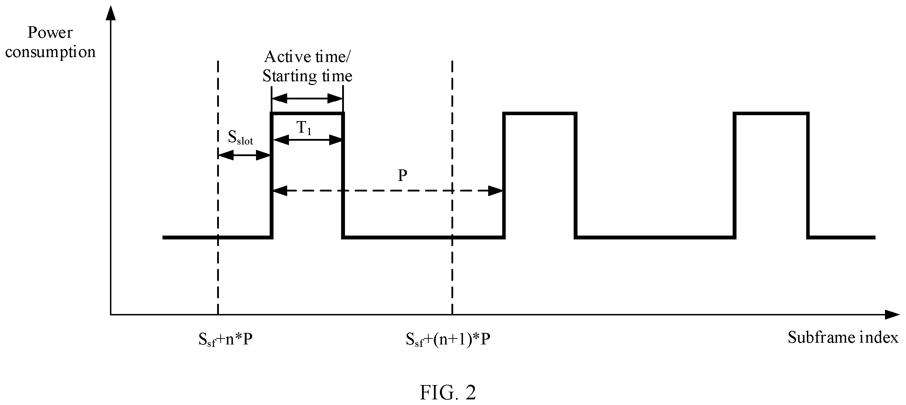

FIG. 2 shows an example of the DRX mechanism of the terminal apparatus. The DRX mechanism relates to the following parameters: a DRX long cycle start offset drx-LongCycleStartOffset, a DRX slot offset drx-SlotOffset, and a DRX on duration timer drx-onDurationTimer.

The drx-LongCycleStartOffset is used to configure a time window of a long DRX cycle (Long DRX cycle), including a period P (also referred to as a DRX period) of each time window and a start subframe offset S_{sf}. The two may be in a unit of a subframe (subframe). The drx-SlotOffset is used to configure a start slot offset value Sₛₗₒₜ in on duration (on Duration) in a start subframe, and may be counted in a unit of a slot (Slot). The drx-onDurationTimer is used to configure duration T₁ of on Duration starting from a start moment, and a unit may be millisecond (ms). The terminal apparatus enters active time (active time) at a start moment of a start slot of a start subframe of each time window. When the on Duration ends, the terminal apparatus enters inactive time (inactive time). The active time may also be referred to as an active period, active time, or the like. The terminal apparatus is in an active state in the active time. The inactive time may also be referred to as inactive time, an inactive period, or the like. The terminal apparatus is in an inactive state in the inactive time.

When the terminal apparatus is configured with the DRX mechanism, and each DRX cycle arrives, the terminal apparatus first enters the active time/On Duration, and starts a DRX on duration timer (drx-onDurationTimer). After the DRX on duration timer expires, the terminal apparatus enters the inactive time. If a PDCCH for scheduling data transmission is detected in the On Duration, the terminal apparatus starts or restarts a DRX inactivity timer (drx-InactivityTimer). When the DRX inactivity timer runs, the terminal apparatus is in the active time.

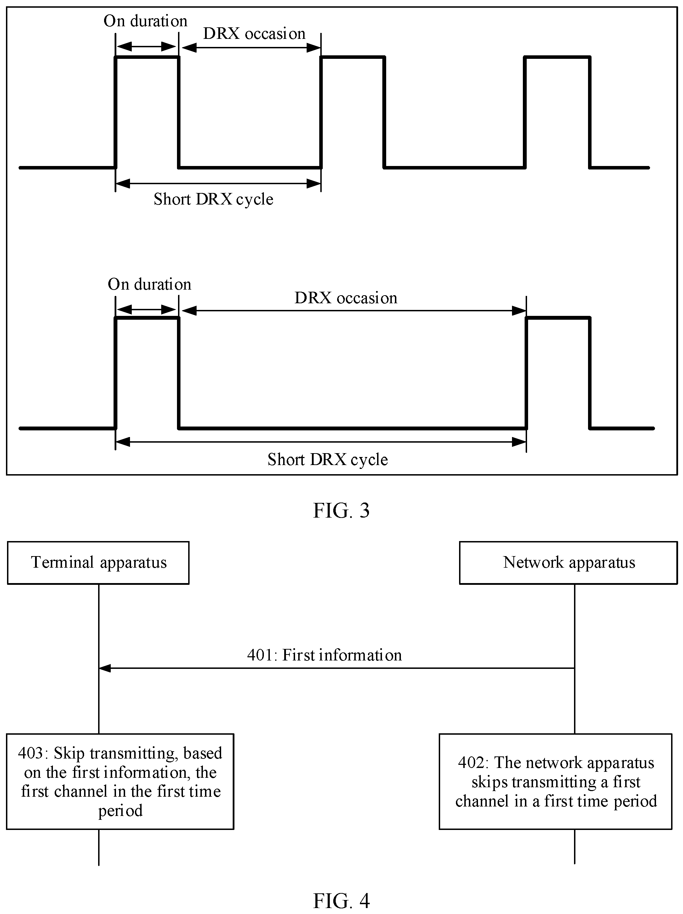

FIG. 3 is an example of a diagram of a DRX mechanism of a terminal apparatus according to an embodiment of this application. As shown in FIG. 3, the DRX mechanism has two cycle configurations: a long DRX cycle (Long DRX cycle) and a short DRX cycle (Short DRX cycle). After the drx-InactivityTimer ends or a DRX command (DRX Command) media access control channel element (media access control channel element, MAC CE) is received, the terminal apparatus starts a drx-ShortCycleTimer after the drx-InactivityTimer ends or at a first symbol after the DRX Command MAC CE is received. During running of the timer, UE enters a short DRX cycle state, that is, the on Duration is determined based on the Short DRX cycle. When the drx-ShortCycleTimer ends, the UE enters a long DRX cycle state, that is, the on Duration is determined based on the Long DRX cycle.

The terminal apparatus may enter the Short DRX cycle again after each drx-InactivityTimer ends; and when no data arrives for a continuous time period, the terminal apparatus may enter the Long DRX cycle. In addition, a base station may forcibly enter the Short DRX cycle by using the DRX Command MAC CE, or may forcibly enter the Long DRX cycle by using a Long DRX Command MAC CE.

### (2) Discontinuous transmission (dis-continuous transmission, DTX) mechanism

To further reduce power consumption of the network apparatus, the network apparatus may be enabled not to send data transmission in a time period, or the network apparatus may be enabled not to send all or some channels in a time period. This manner of reducing power consumption of the network apparatus may be referred to as the DTX mechanism of the network apparatus, or may be referred to as the DTX mechanism of the network apparatus.

Because the network apparatus may communicate with a plurality of terminal apparatuses in a cell, the DTX mechanism of the network apparatus in this application may be a cell-level DTX mechanism of the network apparatus. For ease of description, DTX of the network apparatus and cell-level DTX in this application may be referred to as DTX.

Due to interactivity of a communication system, the DTX has different interpretations for two or more communication devices in communication. For the network apparatus, the DTX may be understood as a discontinuous transmission mechanism. For a receiving device (for example, a terminal apparatus) corresponding to a sending device configured with the DTX, the DTX of the receiving device in this case may be understood as a discontinuous reception mechanism. Therefore, for the receiving device (the terminal apparatus), the DTX of the network apparatus and the cell-level DTX in this application may also be understood as cell-level DRX of the terminal apparatus and terminal apparatus group (UE group)-level DRX of the terminal apparatus.

Power saving of the network apparatus can be implemented by using the DTX mechanism of the network apparatus.

For example, the network apparatus may set a transmission pattern, and in one transmission cycle, data transmission is performed only in some time periods, and data receiving and sending are not performed in other time periods.

When there is no service load, the DTX mechanism of the network apparatus may be used, to reduce power consumption of the network apparatus.

When a service load is very light, although data is transmitted in many transmission time intervals, resource utilization of the transmission time intervals is very low. In this case, the DTX mechanism of the network apparatus may also be used, and to-be-sent data is aggregated to a time period A for sending, so that a DTX state may be entered in a time period B, to implement static power saving of the network apparatus.

The DTX mechanism of the network apparatus in embodiments of this application is a DTX mechanism of the network apparatus. In embodiments of this application, the network apparatus may be configured with the DTX mechanism of the network apparatus, and the terminal apparatus may also be configured with the DTX mechanism of the network apparatus.

Embodiments of this application further relate to a DRX mechanism of the network apparatus. In embodiments of this application, the network apparatus may be configured with the DRX mechanism of the network apparatus, and the terminal apparatus may also be configured with the DRX mechanism of the network apparatus. The DRX mechanism of the network apparatus may also be a cell-level DRX mechanism. Similarly, for the terminal apparatus, the DRX mechanism of the network apparatus and the cell-level DRX mechanism in this application may also be understood by the terminal apparatus as a cell-level DTX mechanism of a network apparatus of the terminal apparatus and a terminal apparatus group (UE group)-level DTX mechanism of a network apparatus of the terminal apparatus. For ease of description, in this application, one DRX cycle of the network apparatus is used for description.

The network apparatus may be configured with the DTX mechanism of the network apparatus, or may be configured with the DRX mechanism of the network apparatus, or may be configured with the DTX mechanism of the network apparatus and the DRX mechanism of the network apparatus. The network apparatus may further be configured with one or more of the DRX mechanism of the terminal apparatus, the DTX mechanism of the network apparatus, and the DRX mechanism of the network apparatus. The terminal apparatus may be configured with the DTX mechanism of the network apparatus, or may be configured with the DRX mechanism of the network apparatus, or may be configured with the DTX mechanism of the network apparatus and the DRX mechanism of the network apparatus. The terminal apparatus may further be configured with one or more of the DRX mechanism of the terminal apparatus, the DTX mechanism of the network apparatus, and the DRX mechanism of the network apparatus.

### (3) Time unit

The time unit is a time domain unit used for signal transmission, and may include a time domain unit like a radio frame (radio frame), a subframe (subframe), a slot (slot), a mini-slot (mini-slot), or at least one orthogonal frequency division multiplexing (Orthogonal Frequency Division Multiplexing, OFDM) symbol. The OFDM symbol may also be referred to as a time domain symbol for short. In an example of a possible time unit relationship, a time domain length of one radio frame is 10 ms. One radio frame may include 10 radio subframes, and a time domain length of one radio subframe is 1 ms. One radio subframe may include one or more slots, and a specific quantity of slots included in one subframe is related to a subcarrier space (Subcarrier Space, SCS). When the SCS is 15 kHz, a time domain length of one slot is 1 ms. One slot includes 14 symbols.

### (4) Radio network temporary identifier (radio network temporary identifier, RNTI)

The RNTI is used to distinguish or identify a terminal apparatus connected to a cell, a specific radio channel, a group of terminal apparatuses in a paging case, a group of terminal apparatuses that receive a power control parameter, and system information sent by a network apparatus to all terminal apparatuses. The RNTI may be a 16-bit identifier whose value depends on a type of the RNTI. The RNTI used for paging (paging) is denoted as a P-RNTI. In addition, there are a cell radio network temporary identifier (cell radio network temporary identifier, C-RNTI) used for data scheduling, a modulation and coding scheme cell radio network temporary identifier (modulation and coding scheme cell radio network temporary identifier, MCS-C-RNTI), a configured scheduling radio network temporary identifier (configured scheduling radio network temporary identifier, CS-RNTI), and the like.

The DRX mechanism of the terminal apparatus includes an active period and an inactive period. In the active period, the terminal apparatus may normally receive and send information, and may also detect a PDCCH. In the inactive period, the terminal device does not perform PDCCH detection or receive and send a signal scheduled/activated by a PDCCH, but still needs to receive and send a signal not scheduled/activated by a PDCCH. The signal not scheduled/activated by the PDCCH includes, for example, a semi-persistent scheduling physical downlink shared channel (Semi-Persistent Scheduling PDSCH, SPS PDSCH), a configured grant physical uplink shared channel (configured grant PUSCH, CG PUSCH), and some common signals. The common signal includes, for example, a synchronization signal (synchronization signal, SS) and physical broadcast channel (physical broadcast channel, PBCH) block, a system information block (system information block, SIB) (including other system information blocks such as a SIB1 and a SIB2), and a physical random access channel (Physical Random Access Channel, PRACH). The terminal device may also receive some periodic signals and semi-persistent signals in the inactive period. For example, the terminal device may receive a periodic channel state information reference signal (channel state information reference signal, CSI-RS) and a semi-persistent CSI-RS. The terminal device may also send a scheduling request (Scheduling request, SR) in the inactive period.

In the DRX mechanism of the terminal apparatus, the terminal apparatus still has a large quantity of signal receiving and sending behaviors in the inactive period. As a result, the network apparatus (for example, a base station) still needs to receive and send a signal based on a requirement of the terminal apparatus in the inactive period of the terminal apparatus, and power consumption of the network apparatus is high.

Based on this, an embodiment of this application provides a possible implementation. The implementation may also be understood as the DRX mechanism of the network apparatus and/or the DTX mechanism of the network apparatus. To be specific, the network apparatus receives and sends a signal based on the DRX mechanism of the network apparatus and/or the DTX mechanism of the network apparatus, and the terminal apparatus also needs to consider the DRX mechanism of the network apparatus and/or the DTX mechanism of the network apparatus when receiving and sending a signal. This mechanism can reduce power consumption of the network apparatus and the terminal apparatus. The following lists several possible examples by using Implementation A1, Implementation A2, Implementation B1, and Implementation B2.

Implementation A1: The DRX mechanism of the network apparatus includes an active period and an inactive period. The network apparatus may normally receive information in the active period of the DRX mechanism of the network apparatus, and does not receive information at all in the inactive period of the DRX mechanism of the network apparatus. In this way, the terminal apparatus may normally send information in the active period of the DRX mechanism of the network apparatus, or the terminal apparatus may not send information at all in the inactive period of the DRX mechanism of the network apparatus, so that power consumption of the network apparatus and the terminal apparatus can be reduced.

Implementation A2: The DTX mechanism of the network apparatus includes an active period and an inactive period. The network apparatus may normally send information in the active period of the DTX mechanism of the network apparatus, and does not send information at all in the inactive period of the DTX mechanism of the network apparatus. In this way, the terminal apparatus may normally send information in the active period of the DTX mechanism of the network apparatus, or the terminal apparatus may not receive information at all in the inactive period of the DTX mechanism of the network apparatus, so that power consumption of the network apparatus and the terminal apparatus can be reduced.

Implementation B1: When the network apparatus and/or the terminal apparatus are/is configured with the DRX mechanism of the network apparatus, in the inactive period of the DRX mechanism of the network apparatus, the network apparatus is allowed to receive some information of specified types, and the network apparatus is not allowed to receive information that does not belong to the specified types. In this way, the terminal apparatus may also normally send information in the active period of the DRX mechanism of the network apparatus, and send the information of the specified types in the inactive period corresponding to the DRX mechanism of the network apparatus, so that power consumption of the terminal apparatus and the network apparatus is reduced.

Implementation B2: When the network apparatus and/or the terminal apparatus are/is configured with the DTX mechanism of the network apparatus, in the inactive period of the DTX mechanism of the network apparatus, the network apparatus is allowed to send some information of specified types, and the network apparatus is not allowed to send information that does not belong to the specified types. In this way, the terminal apparatus may normally send information in the active period of the DTX mechanism of the network apparatus, and the terminal apparatus may also receive the information of the specified types in the inactive period of the DTX mechanism of the network apparatus, so that power consumption of the terminal apparatus and the network apparatus is reduced.

Implementation A1 may be implemented simultaneously with Implementation A2 or Implementation B2, or Implementation A2 may be implemented simultaneously with Implementation A1 or Implementation B1. Implementation A1, Implementation A2, Implementation B1, and Implementation B2 may alternatively be separately implemented. The following describes these implementations in more detail with reference to the accompanying drawings.

In embodiments of this application, when the network apparatus and/or the terminal apparatus are/is configured with the DRX mechanism of the network apparatus and/or the DTX mechanism of the network apparatus, the terminal apparatus may not be configured with the DRX mechanism of the terminal apparatus, or the terminal apparatus may be configured with the DRX mechanism of the terminal apparatus. In practice, the DRX mechanism of the network apparatus and/or the DTX mechanism of the network apparatus may conflict with the DRX mechanism of the terminal apparatus. The terminal apparatus may perform data transmission with reference to the DRX mechanism of the network apparatus and/or the DTX mechanism of the network apparatus and the DRX of the terminal apparatus. It may also be understood as that the terminal apparatus adjusts the DRX mechanism of the terminal apparatus with reference to the DRX mechanism of the network apparatus and/or the DTX mechanism of the network apparatus. An adjusted DRX mechanism of the terminal apparatus may also be referred to as an enhanced DRX mechanism of the terminal apparatus. Similarly, the network apparatus may also perform data transmission with reference to the DRX mechanism of the network apparatus and/or the DTX mechanism of the network apparatus and the DRX of the terminal apparatus. Embodiments of this application are subsequently described in detail with reference to the accompanying drawings, and details are not described herein.

The DRX mechanism of the network apparatus in embodiments of this application and a first DRX mechanism may alternatively be replaced with each other, and the DTX mechanism of the network apparatus in embodiments of this application and the first DTX mechanism may alternatively be replaced with each other. The DRX mechanism of the terminal apparatus in embodiments of this application and a second DRX mechanism may alternatively be replaced with each other.

Based on the embodiments shown in FIG. 1, FIG. 2, and FIG. 3 and the foregoing other content, FIG. 4 shows an example of a possible schematic flowchart of a communication method according to an embodiment of this application. A solution in FIG. 4 is described by using an example in which a network apparatus and a terminal apparatus interact with each other for execution. For related descriptions of the network apparatus and the terminal apparatus, refer to the foregoing content. Details are not described again.

As shown in FIG. 4, the method includes the following steps.

**Step 401:** The network apparatus sends first information to the terminal apparatus.

Correspondingly, the terminal apparatus receives the first information from the network apparatus.

In this embodiment of this application, the first information indicates that transmission of a first channel is not allowed in a first time period, and the first channel includes all uplink channels and/or all downlink channels.

In this embodiment of this application, that the network apparatus and/or the terminal apparatus are/is configured with a DRX mechanism of the network apparatus and/or a DTX mechanism of the network apparatus may be understood as follows: The network apparatus is configured with one or more of the DRX mechanism of the network apparatus and the DTX mechanism of the network apparatus, and/or the terminal apparatus is configured with one or more of the DRX mechanism of the network apparatus and the DTX mechanism of the network apparatus. For example, the terminal apparatus may learn of (or is configured with) the DRX mechanism of the network apparatus and/or the DTX mechanism of the network apparatus by receiving the first information. The DRX mechanism of the network apparatus in this embodiment of this application may include a cycle. In this embodiment of this application, one cycle in the DRX mechanism of the network apparatus is used as an example for description. Duration of the cycle in the DRX mechanism of the network apparatus may include active time and inactive time, and in the DRX mechanism of the network apparatus, the active time and the inactive time may repeatedly appear in a form of the duration of the cycle. The DTX mechanism of the network apparatus in this embodiment of this application may include one cycle, and cycle duration of any two cycles is equal. One cycle in the DTX mechanism of the network apparatus may include active time and inactive time, and in the DTX mechanism of the network apparatus, the active time and the inactive time may repeatedly appear in a form of duration of the cycle. The first time period may be considered as a time period in one cycle in the DRX mechanism of the network apparatus and/or the DTX mechanism of the network apparatus, for example, may be considered as inactive time or a time period in the inactive time in one cycle in the DRX mechanism of the network apparatus and/or the DTX mechanism of the network apparatus. The first time period may be less than duration of one cycle in the DRX mechanism of the network apparatus and/or the DTX mechanism of the network apparatus. The first time period may include one or more time units. For related descriptions of the time unit, refer to the foregoing content. Details are not described again.

In still another possible implementation, the first information further indicates that uplink channel transmission and/or downlink channel transmission are/is allowed in a second time period. In this embodiment of this application, the first information may also be referred to as configuration information, for example, configuration information of the DRX mechanism of the network apparatus and/or configuration information of the DTX mechanism of the network apparatus. The second time period may be considered as a time period in one cycle in the DRX mechanism of the network apparatus and/or the DTX mechanism of the network apparatus, for example, may be considered as active time or a time period in the active time in one cycle in the DRX mechanism of the network apparatus and/or the DTX mechanism of the network apparatus.

For example, the network apparatus and/or the terminal apparatus are/is configured with the DRX mechanism of the network apparatus, and the first time period and the second time period are two time periods in one cycle in the DRX mechanism of the network apparatus. There is no intersection of the second time period and the first time period in the cycle. In a possible implementation, a union set of the first time period and the second time period may be a universal set of one cycle in the DRX mechanism of the network apparatus. For another example, the network apparatus and/or the terminal apparatus are/is configured with the DTX mechanism of the network apparatus, and the first time period and the second time period are two time periods in one cycle in the DTX mechanism of the network apparatus. There is no intersection of the second time period and the first time period in the cycle. In a possible implementation, a union set of the first time period and the second time period may be a universal set of one cycle in the DTX mechanism of the network apparatus.

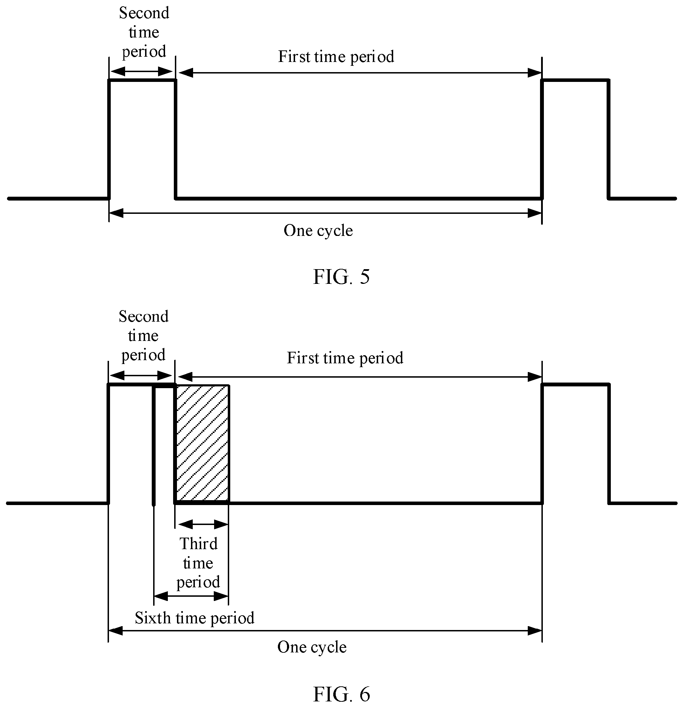

FIG. 5 shows an example of a possible relationship between the first time period and the second time period. As shown in FIG. 5, one cycle shown in FIG. 5 may be one cycle in the DRX mechanism of the network apparatus. In this case, the second time period may represent active time in the DRX mechanism of the network apparatus, and the first time period may represent inactive time in the DRX mechanism of the network apparatus. One cycle shown in FIG. 5 may alternatively be one cycle in the DTX mechanism of the network apparatus. In this case, the second time period may represent active time in the DTX mechanism of the network apparatus, and the first time period may represent inactive time in the DTX mechanism of the network apparatus.

In a possible implementation, the first information in this embodiment of this application indicates at least one of a first cycle, first starting time, first closing time, starting duration, or closing duration. The first starting time is a start moment of the second time period in the first cycle, the first closing time is a start moment of the first time period in the first cycle, the starting duration is duration of the second time period, and the closing duration is duration of the first time period.

For example, the first information includes the configuration information of the DRX mechanism of the network apparatus, the first information may indicate a time domain pattern in one cycle, and the time domain pattern indicates active time in the DRX mechanism of the network apparatus. In the cycle, all time other than the active time in the DRX mechanism of the network apparatus belongs to inactive time.

For another example, the first information includes the configuration information of the DTX mechanism of the network apparatus, the first information may indicate a time domain pattern in one cycle, and the time domain pattern indicates active time in the DTX mechanism of the network apparatus. In the cycle, all time other than the active time in the DTX mechanism of the network apparatus belongs to inactive time.

**Step 402:** The network apparatus skips transmitting the first channel in the first time period.

In step 402, it may also be understood as that the terminal apparatus skips transmitting the first channel in the first time period.

In step 402, the first channel may include all the uplink channels and/or all the downlink channels. The following separately provides descriptions by using Implementation C1, Implementation C2, and Implementation C3.

**Implementation C1:** The network apparatus and/or the terminal apparatus are/is configured with the DRX mechanism of the network apparatus, and the network apparatus is not allowed to receive any uplink channel in the inactive time in the DRX mechanism of the network apparatus. It may also be understood as that the network apparatus notifies the terminal apparatus of the DRX mechanism of the network apparatus, or the terminal apparatus is configured with the DRX mechanism of the network apparatus, and the terminal apparatus is not allowed to send any uplink channel in the inactive time in the DRX mechanism of the network apparatus.

When the network apparatus and/or the terminal apparatus are/is configured with the DRX mechanism of the network apparatus, the first time period may be considered as the inactive time in the DRX mechanism of the network apparatus. The network apparatus may not receive all the uplink channels in the inactive time in the DRX mechanism of the network apparatus. For another example, the terminal apparatus may not send all the uplink channels in the inactive time in the DRX mechanism of the network apparatus. For example, the network apparatus may shut down, in the first time period, a channel used to receive the uplink channel, and/or the network apparatus may turn off, in the first time period, a radio frequency processing component configured to receive the uplink channel, and/or the network apparatus may turn off, in the first time period, an intermediate frequency processing component configured to receive the uplink channel, and/or the network apparatus may turn off, in the first time period, a baseband processing component configured to receive the uplink channel. In this way, power consumption of the network apparatus can be reduced.

In another possible implementation, the first information further indicates that the uplink channel transmission is allowed in the second time period. It may also be understood as that the network apparatus is allowed to receive all types of uplink channels in the second time period. It may also be understood as that the terminal apparatus is allowed to send all the types of uplink channels in the second time period.

When the network apparatus and/or the terminal apparatus are/is configured with the DRX mechanism of the network apparatus, the second time period may be considered as the active time in the DRX mechanism of the network apparatus, the network apparatus is allowed to receive all the types of uplink channels in the active time in the DRX mechanism of the network apparatus, and the network apparatus may receive all the types of uplink channels in the active time in the DRX mechanism of the network apparatus. The terminal apparatus may send all the types of uplink channels in the active time in the DRX mechanism of the network apparatus.

When the network apparatus and/or the terminal apparatus are/is configured with the DRX mechanism of the network apparatus, the DTX mechanism of the network apparatus may be configured or may not be configured. For example, if the network apparatus is not configured with the DTX mechanism of the network apparatus, an occasion on which the network apparatus sends the downlink channel may not be limited. For example, the network apparatus may be always in a state in which the downlink channel can be normally sent, that is, the network apparatus can send the downlink channel at any time, or the network apparatus may determine, based on another configuration, an occasion on which the downlink channel is sent. For another example, the terminal apparatus is not configured with the DTX mechanism of the network apparatus, and the terminal apparatus may be always in a state in which the downlink channel can be normally received, or may receive the downlink channel based on a DRX mechanism that is of the terminal apparatus and that is configured for the terminal apparatus, or may determine, based on another configuration, an occasion on which the downlink channel is received.

**Implementation C2:** The network apparatus and/or the terminal apparatus are/is configured with the DTX mechanism of the network apparatus, and the network apparatus is not allowed to send any downlink channel in the inactive time in the DTX mechanism of the network apparatus. It may also be understood as that the network apparatus notifies the terminal apparatus of the DTX mechanism of the network apparatus, or the terminal apparatus is configured with the DTX mechanism of the network apparatus, and the terminal apparatus is not allowed to receive any downlink channel in the inactive time in the DTX mechanism of the network apparatus.

When the network apparatus and/or the terminal apparatus are/is configured with the DTX mechanism of the network apparatus, the first time period may be considered as the inactive time in the DTX mechanism of the network apparatus, and the network apparatus may not send all the downlink channels in the inactive time in the DTX mechanism of the network apparatus. The terminal apparatus may not receive all the downlink channels in the inactive time in the DTX mechanism of the network apparatus. For example, the network apparatus may shut down, in the first time period, a channel used to send the downlink channel. For another example, the network apparatus may turn off, in the first time period, a radio frequency processing component configured to send the downlink channel. For another example, the network apparatus may turn off, in the first time period, an intermediate frequency processing component configured to send the downlink channel. For another example, the network apparatus may turn off, in the first time period, a baseband processing component configured to send the downlink channel. In this way, power consumption of the network apparatus can be reduced. For example, the terminal apparatus may shut down, in the first time period, a channel used to receive the downlink channel. For another example, the terminal apparatus may turn off, in the first time period, a radio frequency processing component configured to receive the downlink channel. For another example, the terminal apparatus may turn off, in the first time period, an intermediate frequency processing component configured to receive the downlink channel. For another example, the terminal apparatus may turn off, in the first time period, a baseband processing component configured to receive the downlink channel. In this way, power consumption of the terminal apparatus can be reduced.

In still another possible implementation, the first information further indicates that the downlink channel transmission is allowed in the second time period. It may also be understood as that the network apparatus is allowed to send all types of downlink channels in the second time period. It may also be understood as that the terminal apparatus is allowed to receive all the types of downlink channels in the second time period.

When the network apparatus and/or the terminal apparatus are/is configured with the DTX mechanism of the network apparatus, the second time period may be considered as the active time in the DTX mechanism of the network apparatus, the network apparatus is allowed to send all the types of downlink channels in the active time in the DTX mechanism of the network apparatus, and the network apparatus and/or the terminal apparatus may send all the types of downlink channels in the active time in the DTX mechanism of the network apparatus.

When the network apparatus and/or the terminal apparatus are/is configured with the DTX mechanism of the network apparatus, the DRX mechanism of the network apparatus may be configured or may not be configured. For example, if the network apparatus is not configured with the DRX mechanism of the network apparatus, an occasion on which the network apparatus receives the uplink channel may not be limited. For example, the network apparatus may be always in a state in which the uplink channel can be normally received, that is, the network apparatus can receive the uplink channel at any time, or the network apparatus may determine, based on another configuration, an occasion on which the uplink channel is received. For another example, the terminal apparatus is not configured with the DRX mechanism of the network apparatus, and the terminal apparatus may be always in a state in which the uplink channel can be normally sent, or may determine, based on another configuration, an occasion on which the uplink channel is sent.

**Implementation C3:** The network apparatus and/or the terminal apparatus are/is configured with the DTX mechanism of the network apparatus and the DRX mechanism of the network apparatus, the network apparatus is not allowed to receive any uplink channel in the inactive time in the DRX mechanism of the network apparatus, and the network apparatus is not allowed to send any downlink channel in the inactive time in the DTX mechanism of the network apparatus. It may also be understood as that, the network apparatus notifies the terminal apparatus of the DTX mechanism of the network apparatus and the DRX mechanism of the network apparatus, or the terminal apparatus is configured with the DTX mechanism of the network apparatus and the DRX mechanism of the network apparatus, the terminal apparatus is not allowed to receive any downlink channel in the inactive time in the DTX mechanism of the network apparatus, and the terminal apparatus is not allowed to send any uplink channel in the inactive time in the DRX mechanism of the network apparatus.

In this embodiment of this application, the network apparatus may be configured with the DRX mechanism of the network apparatus and the DTX mechanism of the network apparatus. If there is an intersection of the inactive time in the DRX mechanism of the network apparatus and the inactive time in the DTX mechanism of the network apparatus, the network apparatus may not send all the downlink channels or may not receive all the uplink channels in the intersection of the inactive time in the DRX mechanism of the network apparatus and the inactive time in the DTX mechanism of the network apparatus. In this way, power consumption of the network apparatus can be reduced. For related operations of the network apparatus in the intersection, refer to the descriptions in Implementation C1 and Implementation C2. Details are not described again.

In another possible implementation, the first information includes the DRX mechanism of the network apparatus and the DTX mechanism of the network apparatus. If there is an intersection of the active time in the DRX mechanism of the network apparatus and the active time in the DTX mechanism of the network apparatus, the terminal apparatus may receive all the downlink channels and send all the uplink channels in the intersection of the active time in the DRX mechanism of the network apparatus and the active time in the DTX mechanism of the network apparatus.

In this embodiment of this application, there may be or may not be an intersection of the active time in the DRX mechanism of the network apparatus and the active time in the DTX mechanism of the network apparatus. Duration of one cycle in the DRX mechanism of the network apparatus may be or may not be equal to duration of one cycle in the DTX mechanism of the network apparatus.

**Step 403:** The terminal apparatus, based on the first information, skips transmitting the first channel in the first time period.

When the network apparatus and/or the terminal apparatus are/is configured with the DRX mechanism of the network apparatus, and the network apparatus is not allowed to receive any uplink channel in the inactive time (for example, the first time period) in the DRX mechanism of the network apparatus, because the network apparatus does not receive all the uplink channels in the inactive time in the DRX mechanism of the network apparatus, the terminal apparatus may not send all the uplink channels in the inactive time (for example, the first time period) in the DRX mechanism of the network apparatus based on the first information. In this way, power consumption of the terminal apparatus can be reduced.

In another possible implementation, because the network apparatus may receive all types of uplink channels in the active time (for example, the second time period) in the DRX mechanism of the network apparatus, the terminal apparatus may determine, based on the first information, that all the types of uplink channels can be sent in the active time (for example, the second time period) in the DRX mechanism of the network apparatus, and then the terminal apparatus normally sends the uplink channel in the active time (for example, the second time period) in the DRX mechanism of the network apparatus. For other related descriptions, refer to related descriptions in step 402. Details are not described again.

When the network apparatus and/or the terminal apparatus are/is configured with the DTX mechanism of the network apparatus, and the network apparatus is not allowed to send any downlink channel in the inactive time (for example, the first time period) in the DTX mechanism of the network apparatus, because the network apparatus does not send all the downlink channels in the inactive time in the DTX mechanism of the network apparatus, the terminal apparatus may not receive all the downlink channels in the inactive time (for example, the first time period) in the DTX mechanism of the network apparatus based on the first information. In this way, power consumption of the terminal apparatus can be reduced.

In another possible implementation, because the network apparatus may send all types of downlink channels in the active time (for example, the second time period) in the DTX mechanism of the network apparatus, the terminal apparatus may determine, based on the first information, that all the types of downlink channels can be received in the active time (for example, the second time period) in the DTX mechanism of the network apparatus, and then the terminal apparatus may normally receive the downlink channel in the active time (for example, the second time period) in the DTX mechanism of the network apparatus. For other related descriptions, refer to related descriptions in step 402. Details are not described again.

In another possible implementation, the terminal apparatus may be configured with the DRX mechanism of the network apparatus and the DTX mechanism of the network apparatus. If there is an intersection of the inactive time in the DRX mechanism of the network apparatus and the inactive time in the DTX mechanism of the network apparatus, the terminal apparatus may not send all the downlink channels or may not receive all the uplink channels in the intersection of the inactive time in the DRX mechanism of the network apparatus and the inactive time in the DTX mechanism of the network apparatus. In this way, power consumption of the network apparatus can be reduced.

In still another possible implementation, the terminal apparatus may be configured with the DRX mechanism of the network apparatus and the DTX mechanism of the network apparatus. If there is an intersection of the active time in the DRX mechanism of the network apparatus and the active time in the DTX mechanism of the network apparatus, the terminal apparatus may send all the downlink channels or receive all the uplink channels in the intersection of the active time in the DRX mechanism of the network apparatus and the active time in the DTX mechanism of the network apparatus.

In a possible implementation, when the network apparatus and/or the terminal apparatus are/is configured with the DTX mechanism of the network apparatus and the DRX mechanism of the network apparatus, the active time in the cycle in the DTX mechanism of the network apparatus may overlap the active time in the cycle in the DRX mechanism of the network apparatus, and the inactive time in the cycle in the DTX mechanism of the network apparatus may overlap the inactive time in the cycle in the DRX mechanism of the network apparatus. It may also be understood as that the cycle in the DTX mechanism of the network apparatus is the same as the cycle in the DRX mechanism of the network apparatus. In addition, active time in one cycle is the active time in the DTX mechanism of the network apparatus, and is also the active time in the DRX mechanism of the network apparatus. Inactive time in one cycle is the inactive time in the DTX mechanism of the network apparatus, and is also the inactive time in the DRX mechanism of the network apparatus.

It can be learned from the foregoing content that, because the first information indicates the network apparatus not to transmit the first channel in the first time period, the terminal apparatus may not transmit the first channel in the first time period, so that power consumption of the network apparatus can be reduced, and power consumption of the terminal apparatus can also be reduced.

In this embodiment of this application, the first information indicates that transmission of the first channel is not allowed in the first time period. In practice, in step 403, in a possible implementation, when a preset first condition is met, the terminal apparatus transmits a second type of channel in a third time period that is in the first time period. In this way, when the preset first condition is met, the terminal apparatus can transmit the second type of channel in the third time period that is in the first time period. In this way, flexibility of the solution may be improved to meet some temporary requirements of the terminal apparatus. In addition, compared with a solution in which the terminal apparatus is allowed to transmit all types of channels in the third time period, this solution can limit a type of a channel that can be transmitted by the terminal apparatus, to reduce a quantity of channels that need to be sent by the terminal apparatus, so as to reduce power consumption of the terminal apparatus.

In a possible implementation, when the preset first condition is met, the terminal apparatus transmits the second type of channel in the third time period that is in the first time period. The terminal apparatus may or may not transmit a non-second type of channel in the third time period that is in the first time period. For example, the terminal apparatus may transmit, in the third time period, some channels that have an association relationship with the second type of channel transmitted in the third time period. For example, the second type of channel includes a PDSCH. After the terminal apparatus receives the PDSCH in the third time period, the terminal apparatus may further send feedback information of the PDSCH to the network apparatus. The feedback information of the PDSCH does not belong to the second type of channel, the feedback information of the PDSCH has an association relationship with the PDSCH sent by the terminal apparatus in the third time period, and the feedback information of the PDSCH is also allowed to be transmitted in the third time period. For another example, the second type of channel includes a PUSCH. Before transmitting the PUSCH, the terminal apparatus may further receive a PDCCH, where the PDCCH may be used to schedule the PUSCH. The PDCCH may not belong to the second type of channel, the PDCCH may belong to a channel having an association relationship with the PUSCH sent by the terminal apparatus in the third time period, and the PDCCH is also allowed to be transmitted in the third time period. In this way, information transmission requirements of the terminal apparatus and the network apparatus can be met.

In another possible implementation, when the preset first condition is met, the terminal apparatus transmits the second type of channel in the third time period that is in the first time period. The terminal apparatus may not transmit a non-second type of channel in the third time period that is in the first time period. In other words, in this implementation, the terminal apparatus may no longer transmit the non-second type of channel. In this way, power consumption of the network apparatus and the terminal apparatus can be reduced.

In a possible implementation, the first time period and the second time period are two time periods in one cycle, and the second time period is before the first time period. The first condition includes one or more of Condition D1, Condition D2, Condition D3, Condition D4, and Condition D5.

**Condition D1:** The terminal apparatus receives, in the second time period, indication information for scheduling downlink data or uplink data transmission.

It should be noted that, that the terminal apparatus receives, in the second time period, indication information for scheduling downlink data or uplink data includes: The terminal apparatus receives, in the second time period, a PDCCH for scheduling PDSCH or PUSCH transmission. That the terminal apparatus receives, in the second time period, indication information for scheduling downlink data or uplink data transmission may also include: The terminal apparatus receives, in the second time period, a PDCCH for activating an SPS PDSCH or a CG PUSCH.

**Condition D2:** The terminal apparatus receives, in the second time period, indication information for activating an aperiodic signal.

In a possible case, the terminal apparatus receives, in the second time period, indication information for activating aperiodic CSI-RS transmission.

In a possible case, the terminal apparatus receives, in the second time period, indication information for activating aperiodic SRS transmission.

In a possible case, the terminal apparatus receives, in the second time period, indication information for activating aperiodic CSI reporting.

**Condition D3:** The terminal apparatus receives, in the second time period, information indicating to start a first timer, where an intersection of a time period indicated by the first timer and the first time period is the third time period.

The terminal apparatus receives the information indicating to start the first timer, and may start the first timer based on the information. Time indicated by the first timer may be understood as extension time of the active time in the DTX mechanism of the network apparatus and/or the DRX mechanism of the network apparatus. Duration indicated by the first timer may be preset, or may be indicated by the network apparatus.

**Condition D4:** The terminal apparatus sends a preset type of uplink channel in the second time period.

The preset type of uplink channel may include, for example, an uplink scheduling request, a PRACH, an uplink signal used to notify the base station of a next CG PUSCH sending occasion and that the terminal apparatus needs to send uplink data, an uplink wake-up signal, and the like.

In a random access process of the terminal apparatus, the network apparatus needs to configure the PRACH for the terminal apparatus to access a system. Because the terminal apparatus moves, a distance between the terminal apparatus and the network apparatus is uncertain. Therefore, if the terminal apparatus needs to send a message to the base station, uplink synchronization needs to be maintained and managed in real time. A purpose of the PRACH is to implement uplink synchronization, establish an uplink synchronization relationship between the terminal apparatus and the network apparatus, and request the network apparatus to allocate a dedicated resource to the terminal apparatus, so that the terminal apparatus normally accesses the network apparatus for service transmission. In the random access process, the terminal apparatus first sends a message 1 (Msg1), namely, the PRACH. After sending the PRACH, the terminal apparatus receives a message 2 (Msg2), and sends a message 3 (Msg3). If the terminal apparatus performs contention-based random access, the terminal apparatus further receives a message 4 (Msg4). Therefore, after the terminal apparatus sends the PRACH, the network apparatus may learn that the terminal apparatus is performing a random access procedure, and there are transmission requirements of the Msg2, the Msg3, and the Msg4 subsequently.

When the terminal apparatus has uplink data transmission, the terminal apparatus may request, by sending an uplink scheduling request (Scheduling Request, SR), the network apparatus to schedule uplink transmission, for example, request the network apparatus to schedule a PUSCH. After the terminal apparatus sends the SR, the network apparatus may learn that the terminal apparatus has an uplink transmission requirement.

The base station configures a CG PUSCH resource, and on the CG PUSCH resource, the terminal apparatus may directly send the uplink data without receiving scheduling information (for example, a PDCCH). The CG PUSCH resource includes a periodically configured CG PUSCH sending occasion. Therefore, even if the terminal apparatus does not have the uplink data to be sent, the network apparatus still needs to perform receiving on each CG PUSCH sending occasion, and perform subsequent operations such as decoding and coding. This wastes energy. Therefore, before each CG PUSCH sending occasion, the terminal apparatus may send indication information to indicate whether the terminal apparatus sends the uplink data on the next CG PUSCH sending occasion. After the terminal apparatus sends the indication information indicating that the uplink data needs to be sent on the next CG PUSCH sending occasion, the network apparatus may learn that there is data that needs to be sent on the next CG PUSCH sending occasion.

The terminal apparatus may wake up, by sending the uplink wake-up signal, the network apparatus that is sleeping or in an inactive state. After the terminal apparatus sends the uplink wake-up signal, the network apparatus may learn that the terminal apparatus exists, or that the terminal apparatus has some signal transmission requirements.

In this implementation, the terminal apparatus can send a preset signal when there is a signal transmission requirement, and then the network apparatus and/or the terminal apparatus can be out of an inactive state in the third time period after the preset signal is sent, to perform channel transmission.

**Condition D5:** The terminal apparatus receives, in the second time period, indication information indicating to extend the second time period, where the indication information indicates to extend the third time period after the second time period.

In this implementation, the network apparatus may send, based on an actual requirement and when there is a signal transmission requirement, the indication information indicating to extend the second time period, so that the network apparatus and/or the terminal apparatus can be out of the inactive state in the third time period after the preset signal is sent, to perform channel transmission.

After the terminal apparatus determines that the one or more conditions in the first condition is met, the terminal apparatus may use a time point at which the first condition is met as a start point of a sixth time period (the start point of the sixth time period may be time in the second time period). Alternatively, the terminal apparatus may use a time point after a time point at which the first condition is met (for example, duration between the time point and the time point at which the condition is met may be specified duration) as the start point of the sixth time period. Duration of the sixth time period may be a preset value, and an end point of the sixth time period may be time in the first time period.

When the network apparatus and/or the terminal apparatus are/is configured with the DRX mechanism of the network apparatus, the sixth time period may be understood as extension time of active time in one cycle in the DRX mechanism of the network apparatus. For example, it may be understood as that the active time in the DRX mechanism of the network apparatus is extended, and end time of extended active time in the DRX mechanism of the network apparatus is end time of the sixth time period. The third time period in this embodiment of this application is an intersection of the sixth time period and the first time period. In time except the third time period that is in the first time period, the terminal apparatus may still not send any type of uplink channel.

When the network apparatus and/or the terminal apparatus are/is configured with the DTX mechanism of the network apparatus, the sixth time period may be understood as extension time of active time in one cycle in the DTX mechanism of the network apparatus. For example, it may be understood as that the active time in the DTX mechanism of the network apparatus is extended, and end time of extended active time in the DTX mechanism of the network apparatus is end time of the sixth time period. The third time period in this embodiment of this application is an intersection of the sixth time period and the first time period. In time except the third time period that is in the first time period, the terminal apparatus may still not receive any type of downlink channel.

**FIG. 6** shows an example of a diagram of a possible relationship between the first time period, the second time period, and the third time period. As shown in FIG. 6, one cycle shown in FIG. 6 may be one cycle in the DTX mechanism of the network apparatus. In this case, the second time period may represent the active time in the DTX mechanism of the network apparatus, and the first time period may represent the inactive time in the DTX mechanism of the network apparatus. It can be learned from FIG. 6 that the start point of the sixth time period may be in the second time period, and that the end time of the sixth time period may be in the first time period. Similarly, the cycle shown in FIG. 6 may alternatively be one cycle in one DRX cycle of the network apparatus. Related content is similar to that about the cycle in the DTX mechanism. Details are not described again.

In another possible implementation, in this embodiment of this application, one cycle (one cycle in the DRX mechanism of the network apparatus and/or the DTX mechanism of the network apparatus) may include a plurality of sixth time periods. For example, after start time of one sixth time period and before end time of the sixth time period, when determining that the first condition is met, the terminal apparatus may determine a time point at which the first condition is met or a time point after a time point at which the first condition is met as a start point of another sixth time period, and the start point of the another sixth time period is in a previous sixth time period, and is in the first time period. In a possible implementation, in this embodiment of this application, total duration of the plurality of sixth time periods is not greater than duration of one cycle, or a quantity of sixth time periods in one cycle is not greater than a preset quantity.

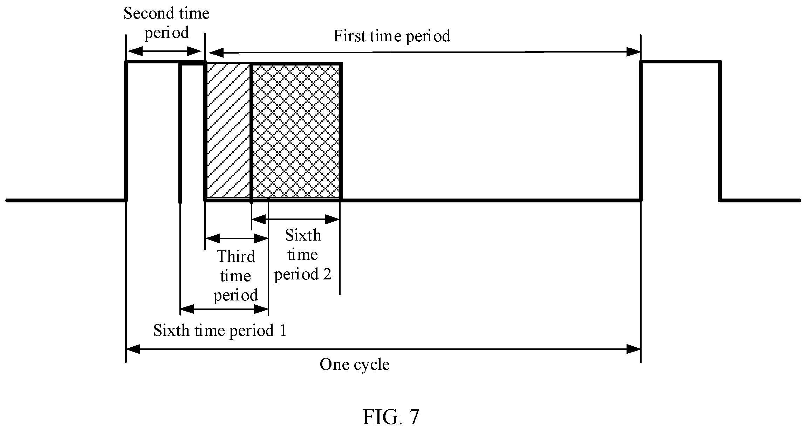

**FIG. 7** shows an example of a diagram of another possible relationship between the first time period, the second time period, and the third time period. As shown in FIG. 7, one cycle shown in FIG. 7 may be one cycle in the DTX mechanism of the network apparatus. In this case, the second time period may represent the active time in the DTX mechanism of the network apparatus, and the first time period may represent the inactive time in the DTX mechanism of the network apparatus. In FIG. 7, when the first condition is met, the terminal apparatus may extend the active time in the DTX mechanism of the network apparatus, that is, there is a sixth time period (namely, a sixth time period 1) in the cycle in the DTX mechanism of the network apparatus. Before end time of the sixth time period 1, if it is determined that the first condition is met again, the active time in the DTX mechanism of the network apparatus may be extended again, that is, there is another sixth time period (namely, a sixth time period 2) in the first time period. Similarly, the cycle shown in FIG. 7 may alternatively be one DRX cycle of the network apparatus. Related content is similar to that about the cycle in the DTX mechanism. Details are not described again.

The terminal apparatus may also transmit the second type of channel in the third time period in a plurality of implementations. For example, after the one or more of Condition D1, Condition D2, Condition D3, and Condition D4 are met, the terminal apparatus may not start the first timer or may start the first timer. The following separately describes Implementation E1 and Implementation E2.

**Implementation E1:** The terminal apparatus may not start the first timer.

In Implementation E1, after determining that one or more of Condition D1, Condition D2, and Condition D4 are met, the terminal apparatus may use a time point at which the condition is met as the start point of the sixth time period (the start point of the sixth time period may be time in the second time period). Alternatively, the terminal apparatus may use a time point after the time point at which the condition is met (for example, duration between the time point and the time point at which the condition is met may be specified duration) as the start point of the sixth time period. The terminal apparatus does not start the first timer in the process.

**Implementation E2:** The terminal apparatus may start the first timer.

In Implementation E2, after the terminal apparatus determines that the one or more of Condition D1, Condition D2, Condition D3, and Condition D4 are met, the terminal apparatus may use a time point at which the condition is met as a time point at which the first timer is started (the time point at which the first timer is started may be the same as the start point of the sixth time period). The terminal apparatus starts the first timer (a start point of the time period indicated by the first timer is time in the second time period). Alternatively, the terminal apparatus may use a time point after a time point at which the condition is met (for example, duration between the time point and the time point at which the condition is met may be specified duration) as a start point of the time period indicated by the first timer. Duration of the time period indicated by the first timer may be a preset value, and an end point of the time period indicated by the first timer may be time in the first time period. The duration of the time period indicated by the first timer may be indicated by the network apparatus to the terminal apparatus by using higher layer signaling, and the higher layer signaling may be, for example, RRC signaling or a MAC CE.

In one cycle in the DRX mechanism of the network apparatus and/or the DTX mechanism of the network apparatus, if the first condition is met again before the extended active time in the DRX mechanism of the network apparatus and/or the DTX mechanism of the network apparatus expires, the terminal apparatus may start the first timer again, to extend the active time in the DRX mechanism of the network apparatus and/or the DTX mechanism of the network apparatus again. In a possible implementation, a threshold of a quantity of times that the first timer can be started in one cycle in the DRX mechanism of the network apparatus and/or the DTX mechanism of the network apparatus may be set. When the quantity of times that the first timer is started in the cycle reaches the threshold, the first timer is not started even if the first condition is met.

In this embodiment of this application, for both a processing solution of the network apparatus and a processing solution of the terminal apparatus in an intersection of the first time period and the extended active time in the DRX mechanism of the network apparatus and/or the DTX mechanism of the network apparatus, refer to the processing solution of the network apparatus and the processing solution of the terminal apparatus that are for the third time period. Details are not described again.

In step 402, the first information indicates that transmission of the first channel is not allowed in the first time period. In practice, in a possible implementation, when a preset second condition is met, the network apparatus transmits the second type of channel in the third time period that is in the first time period. In this way, when the preset second condition is met, the network apparatus can transmit the second type of channel in the third time period that is in the first time period. In this way, flexibility of the solution can be improved, to meet some temporary requirements of the network apparatus.

In a possible implementation, when the preset second condition is met, the network apparatus may transmit the second type of channel in the third time period that is in the first time period. The network apparatus may transmit or may not transmit the non-second type of channel. For example, the network apparatus may transmit, in the third time period, some channels that have an association relationship with the non-second type of channel transmitted in the third time period. For example, the second type of channel includes a PDSCH. Before transmitting the PDSCH, the network apparatus may further send a PDCCH, where the PDCCH may be used to schedule the PDSCH. The PDCCH may not belong to the second type of channel, the PDCCH may belong to a channel having an association relationship with the PDSCH sent by the network apparatus in the third time period, and the PDCCH is also allowed to be transmitted in the third time period. For another example, the second type of channel includes a PUSCH. Before receiving the PUSCH, the network apparatus may further send a PDCCH, where the PDCCH may be used to schedule the PUSCH. The PDCCH may not belong to the second type of channel, the PDCCH may belong to a channel having an association relationship with the PUSCH received by the network apparatus in the third time period, and the PDCCH is also allowed to be transmitted in the third time period. In this way, the information transmission requirements of the terminal apparatus and the network apparatus can be met.

In another possible implementation, when the preset second condition is met, the network apparatus transmits the second type of channel in the third time period that is in the first time period. The network apparatus may not transmit the non-second type of channel. In other words, in this implementation, the network apparatus may no longer transmit the non-second type of channel. In this way, power consumption of the network apparatus and the terminal apparatus can be reduced.

In a possible implementation, the first time period and the second time period are two time periods in one cycle, and the second time period is before the first time period. The second condition includes one or more of Condition F1, Condition F2, Condition F3, Condition F4, and Condition F5.

**Condition F1:** The network apparatus sends, in the second time period, the indication information for scheduling downlink data or uplink data transmission. For related descriptions, refer to related descriptions of Condition D1. Details are not described herein again.

**Condition F2:** The network apparatus sends, in the second time period, the indication information for activating the aperiodic signal. For related descriptions, refer to related descriptions of Condition D2. Details are not described herein again.

**Condition F3:** The network apparatus sends, in the second time period, the information indicating to start the first timer, where the intersection of the time period indicated by the first timer and the first time period is the third time period. For related descriptions, refer to related descriptions of Condition D3. Details are not described herein again.

**Condition F4:** The network apparatus receives the preset type of uplink channel in the second time period. For related descriptions, refer to related descriptions of Condition D4. Details are not described herein again.

**Condition F5:** The indication information indicating to extend the second time period is sent in the second time period, where the indication information indicating to extend the second time period indicates to extend the third time period after the second time period. For related descriptions, refer to related descriptions of Condition D5. Details are not described herein again.

The network apparatus may also transmit the second type of channel in the third time period in a plurality of implementations. For example, after one or more of Condition F1, Condition F2, Condition F3, and Condition F4 are met, the network apparatus may not start the first timer or may start the first timer. Related content of the network apparatus is similar to related content of the terminal apparatus, and a difference lies in that the network apparatus transmits the second type of channel in the third time period that is in the first time period when the second condition is met. Therefore, for related descriptions of the network apparatus, refer to the related descriptions of the terminal apparatus. Details are not described again. Similarly, after the second condition is met, the network apparatus may alternatively set the sixth time period by starting a timer, or set the sixth time period by not starting a timer. Related content is similar to the solution on a terminal apparatus side, and details are not described again.

In this embodiment of this application, the second type of channel may include a plurality of possible implementations. The following describes several possible implementations by using examples of Implementation G1, Implementation G2, Implementation G3, Implementation G4, and Implementation G5.

**Implementation G1:** A channel type included in the second type may include an uplink channel type.

In Implementation G1, it may also be understood as that the network apparatus and/or the terminal apparatus are/is configured with the DRX mechanism of the network apparatus. Therefore, the network apparatus is allowed to receive an uplink channel in extended active time. The terminal apparatus may also send an uplink channel in the extended active time, to meet a requirement of the terminal apparatus.

The following describes, by using Content G1-1, Content G1-2, Content G1-3, and Content G1-4, possible implementations of several uplink channel types included in the second type. The second type of channel may include one or more of Content G1-1, Content G1-2, Content G1-3, and Content G1-4. In a possible implementation, a burst dynamic signal sending or receiving requirement of the network apparatus causes one or more sixth time periods in one cycle in the DTX mechanism of the network apparatus. Therefore, in a possible implementation, the network apparatus may receive, in an intersection of the sixth time period and the first time period, an uplink signal dynamically scheduled/activated by a PDCCH, and does not receive another uplink signal that is not dynamically scheduled/activated by a PDCCH. In this way, power consumption of the network apparatus can be reduced. Correspondingly, the terminal apparatus may send, in the intersection of the sixth time period and the first time period, the uplink signal dynamically scheduled/activated by the PDCCH, and does not send the another uplink signal that is not dynamically scheduled/activated by the PDCCH. In this way, power consumption of the network apparatus can be reduced. Therefore, in this possible implementation, the second type of channel may include only Content G1-1. In a possible implementation, the second type of channel may include only Content G1-1 and Content G1-2. In this implementation, in addition to receiving the uplink signal dynamically scheduled/activated by the PDCCH, the network apparatus may further receive a CG PUSCH, for example, Content G1-2. It should be understood that transmission of the CG PUSCH helps the terminal apparatus quickly transmit uplink data.

In a possible implementation, the second type of channel may include Content G1-1, Content G1-2, Content G1-3, and Content G1-4. In this implementation, in addition to receiving the uplink signal dynamically scheduled/activated by the PDCCH, the network apparatus may further receive a CG PUSCH, for example, Content G1-2, and a signal used for uplink measurement, for example, Content G2-3 and Content G2-4. It should be understood that transmission in Content G2-3 and Content G2-4 helps a network perform uplink measurement, to perform scheduling that is more suitable for a current wireless communication environment.

### Content G1-1: an uplink channel corresponding to a first PDCCH

The uplink channel corresponding to the first PDCCH includes one or more of a channel sounding reference signal SRS, a physical uplink shared channel PUSCH, a PUCCH carrying aperiodic CSI, and a PUSCH carrying aperiodic CSI. The uplink signal corresponding to the first PDCCH may also be understood as that the first PDCCH indicates an uplink channel sent by the terminal apparatus. In a possible implementation, the SRS may be understood as an aperiodic SRS, and the first PDCCH is used to indicate the terminal apparatus to send the aperiodic SRS.

The uplink channel corresponding to the first PDCCH needs to be scheduled by the first PDCCH before transmission. Therefore, in a possible implementation, the terminal apparatus may also be allowed to receive the first PDCCH in the third time period. The first PDCCH may not belong to the second type of channel, and the first PDCCH belongs to a channel having an association relationship with the uplink channel corresponding to the first PDCCH. It can be learned that, in this example, some non-second-type of channels having an association relationship with the second type of channel may be allowed to be transmitted between the terminal apparatus and the network apparatus in the third time period. In another possible implementation, the non-second-type of channel is not allowed to be transmitted between the terminal apparatus and the network apparatus in the third time period.

In a possible implementation, the first PDCCH may include one or more of a PDCCH scrambled by a C-RNTI and a PDCCH scrambled by an MCS-C-RNT.

### Content G1-2: a configured grant physical uplink shared channel (configured grant PUSCH, CG PUSCH)

The CG PUSCH herein may be a CG PUSCH activated by a PDCCH, for example, a Type 2 CG PUSCH, or may be a CG PUSCH that does not need to be activated by a PDCCH, for example, a Type 1 CG PUSCH.

Because the Type 2 CG PUSCH needs to be activated by the PDCCH, in a possible implementation, the terminal apparatus may also be allowed to receive the PDCCH in the third time period. The PDCCH may be a PDCCH scrambled by a CS-RNTI. The PDCCH may not belong to the second type of channel, and the PDCCH may belong to a channel having an association relationship with the Type 2 CG PUSCH. It can be learned that, in this example, some non-second-type of channels having an association relationship with the second type of channel may be allowed to be transmitted between the terminal apparatus and the network apparatus in the third time period. In another possible implementation, the non-second-type of channel is not allowed to be transmitted between the terminal apparatus and the network apparatus in the third time period.

### Content G1-3: a periodic SRS

### Content G1-4: a semi-persistent SRS

**Implementation G2:** The channel type included in the second type may include a downlink channel type.

In Implementation G2, it may also be understood as that the network apparatus and/or the terminal apparatus are/is configured with the DTX mechanism of the network apparatus. Therefore, the network apparatus is allowed to send a downlink channel in extended active time. The terminal apparatus may also receive a downlink channel in the extended active time, to meet a requirement of the terminal apparatus.

In a possible implementation, a burst dynamic signal sending or receiving requirement of the network apparatus causes one or more sixth time periods in one cycle in the DTX mechanism of the network apparatus. Therefore, in a possible implementation, the network apparatus may send, in an intersection of the sixth time period and the first time period, a downlink signal dynamically scheduled/activated by a PDCCH, and does not send another downlink signal that is not dynamically scheduled/activated by a PDCCH. In this way, power consumption of the network apparatus can be reduced. Correspondingly, the terminal apparatus may receive, in the intersection of the sixth time period and the first time period, the downlink signal dynamically scheduled/activated by the PDCCH, and does not receive the another downlink signal that is not dynamically scheduled/activated by the PDCCH. In this way, power consumption of the network apparatus can be reduced. Therefore, in this possible implementation, the second type of channel may include only Content G2-2.

In a possible implementation, the second type of channel may include only Content G2-1 and Content G2-2. In this implementation, in addition to sending the downlink signal dynamically scheduled/activated by the PDCCH, the network apparatus may further send some control information, for example, Content G2-2. It should be understood that transmission of control information in Content G2-2 helps the network apparatus quickly adjust a wireless network configuration.

In a possible implementation, the second-type channel may include only Content G2-1, Content G2-2, and Content G2-5. In this implementation, in addition to sending the downlink signal dynamically scheduled/activated by the PDCCH, the network apparatus may further send some control information, for example, Content G2-2 and an SPS PDSCH, for example, Content G2-5. It should be understood that transmission of the SPS PDSCH facilitates fast transmission of downlink data.

In a possible implementation, the second type of channel may include Content G2-1, Content G2-2, Content G2-3, Content G2-4, and Content G2-5. In this implementation, in addition to sending the downlink signal dynamically scheduled/activated by the PDCCH, the network apparatus may further send some control information, for example, Content G2-2, the SPS PDSCH, for example, Content G2-5, and a signal used for downlink measurement, for example, Content G2-3 and Content G2-4. It should be understood that transmission in Content G2-3 and Content G2-4 helps the terminal apparatus quickly measure a downlink signal, so that the network apparatus may perform, based on a measurement result of the terminal apparatus, scheduling that is more suitable for a current wireless communication environment.

In a possible implementation, the second type of channel may include a PDCCH, a downlink channel scheduled/activated/associated by the PDCCH, and the like, and may further include another channel. The following describes several possible implementations of the second type by using Content G2-1, Content G2-2, Content G2-3, and Content G2-4. The second type of channel may meet one or more of Content G2-1, Content G2-2, Content G2-3, and Content G2-4.

### Content G2-1: a third PDCCH

In a possible implementation, the third PDCCH includes one or more of: a PDCCH scrambled by a cancellation indication radio network temporary identifier (Cancellation indication radio network temporary identifier, CI-RNTI), a PDCCH scrambled by an interruption (Interruption radio network temporary identifier, INT-RNTI), a PDCCH scrambled by a slot format indication radio network temporary identifier (Slot format indication radio network temporary identifier, SFI-RNTI), a PDCCH scrambled by a semi-persistent CSI radio network temporary identifier (Semi-persistent CSI radio network temporary identifier, SP-CSI-RNTI), a PDCCH scrambled by a transmit power control-PUCCH radio network temporary identifier (Transmit Power Control-PUCCH radio network temporary identifier, TPC-PUCCH-RNTI), a PDCCH scrambled by a transmit power control-PUSCH radio network temporary identifier (Transmit Power Control-PUSCH radio network temporary identifier, TPC-PUSCH-RNTI), a PDCCH scrambled by a transmit power control-SRS radio network temporary identifier (Transmit Power Control-SRS radio network temporary identifier, TPC-SRS-RNTI), a PDCCH scrambled by a soft resource availability indication radio network temporary identifier (Availability indication radio network temporary identifier, AI-RNTI), a PDCCH scrambled by a (System information radio network temporary identifier, SI-RNTI), a PDCCH scrambled by a random access radio network temporary identifier (Random Access radio network temporary identifier, RA-RNTI), a PDCCH scrambled by a temporary cell radio network temporary identifier (Temporary cell radio network temporary identifier, TC-RNTI), a PDCCH scrambled by a paging radio network temporary identifier (Paging radio network temporary identifier, P-RNTI), a PDCCH scrambled by a power saving radio network temporary identifier (Power saving radio network temporary identifier, PS-RNTI), a PDCCH scrambled by a message B radio network temporary identifier (Message B radio network temporary identifier, MsgB-RNTI), a PDCCH scrambled by a paging early indication radio network temporary identifier (Paging early indication radio network temporary identifier, PEI-RNTI), and a PDCCH scrambled by a radio network temporary identifier for a network power saving cell. It should be noted that, that the terminal apparatus receives the third PDCCH also means that the terminal apparatus needs to receive a downlink signal associated with the third PDCCH (if the third PDCCH is associated with the downlink signal). For example, the terminal apparatus receives the PDCCH scrambled by the SI-RNTI, and the terminal apparatus may receive a PDSCH that is scheduled by the PDCCH scrambled by the SI-RNTI and that is used to carry system information block. For example, the terminal apparatus receives the PDCCH scrambled by the RA-RNTI, and the terminal apparatus may receive a PDSCH that is scheduled by the PDCCH scrambled by the RA-RNTI and that is used to carry a random access message 2.

### Content G2-2: a downlink channel corresponding to a second PDCCH

In a possible implementation, the downlink channel corresponding to the second PDCCH includes one or more of a physical downlink shared channel, an SPS PDSCH, and an aperiodic CSI-RS.

The downlink channel corresponding to the second PDCCH needs to be scheduled by the second PDCCH before transmission. Therefore, in a possible implementation, the terminal apparatus may also be allowed to receive the second PDCCH in the third time period. The second PDCCH may not belong to the second type of channel, and the second PDCCH belongs to a channel having an association relationship with the downlink channel corresponding to the second PDCCH. It can be learned that, in this example, some non-second-type of channels having an association relationship with the second type of channel may be allowed to be transmitted between the terminal apparatus and the network apparatus in the third time period. In another possible implementation, the non-second-type of channel is not allowed to be transmitted between the terminal apparatus and the network apparatus in the third time period.

In a possible implementation, the second PDCCH includes one or more of a PDCCH scrambled by a C-RNTI, a PDCCH scrambled by a CS-RNTI, and a PDCCH scrambled by an MCS-C-RNT.

### Content G2-3: a periodic CSI-RS

### Content G2-4: a semi-persistent CSI-RS

### Content G2-5: an SPS PDSCH

The network apparatus is configured with, by using RRC signaling, semi-persistent scheduling downlink data transmission. To be specific, in each cycle, the PDSCH is sent on a fixed time-frequency resource. Each time-frequency resource is referred to as an SPS PDSCH occasion (SPS PDSCH occasion), and may be interpreted as a sending opportunity, indicating that the time-frequency resource may be used to carry and send downlink data. The SPS PDSCH occasion may be configured and activated by using RRC signaling, or may be configured by using RRC signaling and activated by using a PDCCH after being configured by using the RRC signaling. Therefore, the terminal apparatus needs to receive, in the third time period, the PDCCH used to activate the SPS PDSCH. The PDCCH may be a PDCCH scrambled by a CS-RNTI.

**Implementation G3:** The channel type included in the second type may include an uplink channel type and a downlink channel type.

In Implementation G3, it may also be understood as that the network apparatus and/or the terminal apparatus are/is configured with the DTX mechanism of the network apparatus and the DRX mechanism of the network apparatus. Active time in one cycle in the DTX mechanism of the network apparatus is the same as that in one cycle in the DRX mechanism of the network apparatus. Therefore, in extended active time, the network apparatus is allowed to send a downlink channel, and the network apparatus is also allowed to receive an uplink channel. The terminal apparatus may also receive a downlink channel, or may send an uplink channel in the extended active time, to meet a requirement of the terminal apparatus.

In a possible case, the uplink channel type included in the second type is Content G1-1, and the downlink channel type included in the second type is Content G2-2. A burst dynamic signal sending or receiving requirement of the network apparatus causes one or more sixth time periods in one cycle in the DTX of the network apparatus and the DTX mechanism of the network apparatus. Therefore, in a possible implementation, the network apparatus may send a downlink signal dynamically scheduled/activated by a PDCCH and receive an uplink signal in an intersection of the sixth time period and the first time period, and does not send or receive another signal that is not dynamically scheduled/activated by a PDCCH. In this way, power consumption of the network apparatus can be reduced. Correspondingly, the terminal apparatus may receive the downlink signal dynamically scheduled/activated by the PDCCH and send the uplink signal in the intersection of the sixth time period and the first time period, and does not receive another downlink signal that is not dynamically scheduled/activated by the PDCCH and does not send another uplink signal that is not dynamically scheduled/activated by the PDCCH. In this way, power consumption of the network apparatus can be reduced.

In a possible implementation, the uplink channel type included in the second type is Content G1-1, and downlink channel types included in the second type are Content G2-2 and Content G2-2. For related content and beneficial effects, refer to the foregoing descriptions. Details are not described again.

In a possible implementation, uplink channel types included in the second type are Content G1-1 and Content G1-2, and downlink channel types included in the second type are Content G2-2, Content G2-2, and Content G2-5. For related content and beneficial effects, refer to the foregoing descriptions. Details are not described again.

In a possible implementation, uplink channel types included in the second type are Content G1-1, Content G1-2, Content G1-3, and Content G1-4, and downlink channel types included in the second type are Content G2-2, Content G2-2, Content G2-3, Content G2-4, and Content G2-5. For related content and beneficial effects, refer to the foregoing descriptions. Details are not described again.

**Implementation G4:** The channel type included in the second type may include all uplink channel types and all downlink channel types.

In Implementation G4, it may also be understood as that the network apparatus and/or the terminal apparatus are/is configured with the DTX mechanism of the network apparatus and the DRX mechanism of the network apparatus. Active time in one cycle in the DTX mechanism of the network apparatus is the same as that in one cycle in the DRX mechanism of the network apparatus. Therefore, in extended active time, the network apparatus is allowed to send all downlink channels, and the network apparatus is also allowed to receive all uplink channels. The terminal apparatus may also receive all downlink channels, or may send all uplink channels in the extended active time, to meet a requirement of the terminal apparatus.

**Implementation G5:** The second type does not include a semi-persistent signal and/or a periodic signal.

The semi-persistent signal includes a semi-persistent CSI-RS and a semi-persistent SRS.

The periodic signal includes one or more of an SSB, a SIB, a PRACH, a periodic CSI-RS, a periodic SRS, a CG PUSCH, and an SPS PDSCH.

The SSB includes a primary synchronization signal (primary synchronization signal, PSS), a secondary synchronization signal (secondary synchronization signal, SSS), and a physical broadcast channel (physical broadcast channel, PBCH). The PSS/SSS is mainly used for downlink synchronization of the terminal apparatus and obtaining a cell identifier (identifier, ID). The downlink synchronization includes clock synchronization, radio frame synchronization, and symbol synchronization. The PBCH carries a master information block (master information block, MIB). The MIB includes a system frame number (system frame number, SFN), a subcarrier spacing, and a PDCCH configuration for scheduling system information (system information, SI).

In another possible implementation, when the preset first condition is met, the terminal apparatus transmits the second type of channel in the third time period that is in the first time period, and skips transmitting or transmits another non-second-type of channel. In this way, power consumption of the apparatus can be reduced. In a possible implementation, the non-second-type of channel may be, for example, a channel other than the second type of channel in a signal set in embodiments of this application.

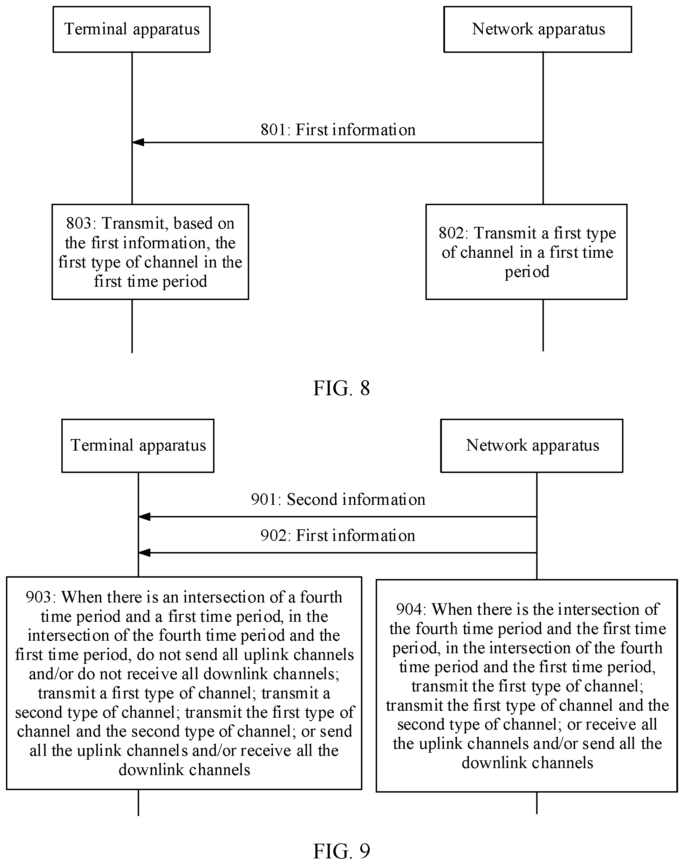

Based on embodiments shown in FIG. 1, FIG. 2, FIG. 3, FIG. 4, FIG. 5, FIG. 6, and FIG. 7 and the foregoing other content, **FIG. 8** shows an example of a possible schematic flowchart of a communication method according to an embodiment of this application. A solution in FIG. 8 is described by using an example in which a network apparatus and a terminal apparatus interact with each other for execution. For related descriptions of the network apparatus and the terminal apparatus, refer to the foregoing content. Details are not described again.

A difference between the embodiment shown in FIG. 4 and the embodiment shown in FIG. 8 lies in that transmission of the first type of channel is allowed in the first time period. Based on this, the terminal apparatus and/or the network apparatus may transmit the first type of channel in the first time period. Alternatively, it may be understood as that the terminal apparatus and/or the network apparatus skip/skips transmitting a non-first-type of channel in the first time period.

As shown in FIG. 8, the method includes the following steps.

**Step 801:** The network apparatus sends first information to the terminal apparatus.

Correspondingly, the terminal apparatus receives the first information from the network apparatus.

The first information indicates that transmission of the first type of channel is allowed in the first time period.

**Step 802:** The network apparatus transmits the first type of channel in the first time period.

In step 802, the network apparatus may further not transmit a non-first-type of channel in the first time period. That is, if a type of a channel that needs to be transmitted by the network apparatus in the first time period is not the first type, the network apparatus skips transmitting the channel.

**Step 803:** The terminal apparatus transmits the first type of channel in the first time period based on the first information.

In step 802, the terminal apparatus may further not transmit the non-first type of channel in the first time period. That is, if a type of a channel that needs to be transmitted by the terminal apparatus in the first time period is not the first type, the terminal apparatus skips transmitting the channel. In another possible implementation, if a type of a channel that needs to be transmitted by the terminal apparatus in the first time period is not the first type, the terminal apparatus also transmits the channel.

In the solution shown in FIG. 8, transmission of the first type of channel is allowed in the first time period. On one hand, some requirements of the terminal apparatus and the network apparatus can be met. On the other hand, because the type of the channel that is allowed to be transmitted in the first time period is limited, the terminal apparatus and/or the network apparatus do/does not need to transmit a large quantity of channels in the first time period. To be specific, a quantity of channels transmitted by the terminal apparatus and/or the network apparatus in the first time period is reduced. This can reduce power consumption of the terminal apparatus and/or the network apparatus. The following further describes the embodiment shown in FIG. 8 with reference to the accompanying drawings.

In this embodiment of this application, the first type of channel may include a plurality of possible implementations. The first type of channel may be configured by the network apparatus by using RRC signaling, or indicated based on the first information, or predefined.

In a possible implementation, for the non-first type of channel, the terminal apparatus may transmit or may not transmit the non-first type of channel in the first time period. For example, the terminal apparatus may transmit, in the first time period, some channels having an association relationship with the first type of channel transmitted in the first time period. For example, the first type of channel includes a PDSCH, and after the terminal apparatus receives the PDSCH in the first time period, the terminal apparatus may further send feedback information of the PDSCH to the network apparatus. The feedback information of the PDSCH does not belong to the first type of channel, the feedback information of the PDSCH has an association relationship with the PDSCH sent by the terminal apparatus in the first time period, and the feedback information of the PDSCH is also allowed to be transmitted in the first time period. For another example, the first type of channel includes a PUSCH. Before transmitting the PUSCH, the terminal apparatus may further receive a PDCCH, where the PDCCH may be used to schedule the PUSCH. The PDCCH may not belong to the first type of channel, the PDCCH may belong to a channel having an association relationship with the PUSCH sent by the terminal apparatus in the first time period, and the PDCCH is also allowed to be transmitted in the first time period. In this way, information transmission requirements of the terminal apparatus and the network apparatus can be met.

In another possible implementation, the terminal apparatus transmits the first type of channel in the first time period. The terminal apparatus skips transmitting the non-first type of channel in the first time period, that is, in this implementation, the terminal apparatus may no longer transmit the non-first type of channel. In this way, power consumption of the network apparatus and the terminal apparatus can be reduced.

The following describes several possible implementations by using examples of Implementation H1, Implementation H2, Implementation H3, and Implementation H4.

**Implementation H1:** The channel type included in the first type may include an uplink channel type.

The following describes, by using Content H1-1, Content H1-2, Content H1-3, Content H1-4, Content H1-5, and Content H1-6, several possible implementations of the uplink channel type included in the first type. The first type of channel may meet one or more of Content H1-1, Content H1-2, Content H1-3, Content H1-4, Content H1-5, and Content H1-6.

### Content H1-1: a CG PUSCH

It should be noted that the CG PUSCH herein may be a CG PUSCH activated by a PDCCH, for example, a Type 2 CG PUSCH, or may be a CG PUSCH that does not need to be activated by a PDCCH, for example, a Type 1 CG PUSCH.

Because the Type 2 CG PUSCH needs to be activated by the PDCCH, in a possible implementation, the terminal apparatus is allowed to receive the PDCCH in the first time period. The PDCCH may be a PDCCH scrambled by a CS-RNTI. The PDCCH may not belong to the first type of channel, and the PDCCH may belong to a channel having an association relationship with the Type 2 CG PUSCH. It can be learned that, in this example, some non-first-type of channels having an association relationship with the first type of channel may be allowed to be transmitted between the terminal apparatus and the network apparatus in the first time period. In another possible implementation, the non-first-type of channel is not allowed to be transmitted between the terminal apparatus and the network apparatus in the first time period.

**Content H1-2:** a hybrid automatic repeat request (hybrid automatic repeat request, HARQ) feedback (acknowledge, ACK) for an SPS PDSCH.

When the network apparatus skips transmitting the SPS PDSCH, the HARQ ACK for the SPS PDSCH is not transmitted. When the network apparatus transmits the SPS PDSCH, the HARQ ACK for the SPS PDSCH is transmitted.
**Content H1-3:** a scheduling request SR
**Content H1-4:** a PRACH
**Content H1-5:** a random access message 3
**Content H1-6:** a PUSCH scheduled by a PDCCH scrambled by an MCS-C-RNTI

It should be noted that the PUSCH scheduled by the PDCCH scrambled by the MCS-C-RNTI is indicated by the PDCCH for transmission. Therefore, in the first time period, the terminal apparatus receives the PDCCH scrambled by the MCS-C-RNTI.

That the network apparatus sends (or the terminal apparatus receives) the PDCCH scrambled by the MCS-C-RNTI may be understood as that the network apparatus receives (or the terminal apparatus sends) the PUSCH scheduled by the PDCCH scrambled by the MCS-C-RNTI.

Similarly, that the network apparatus does not receive (or the terminal apparatus does not send) the PDCCH scrambled by the MCS-C-RNTI may be understood as that the network apparatus does not receive (or the terminal apparatus does not send) the PUSCH scheduled by the PDCCH scrambled by the MCS-C-RNTI.

**Implementation H2:** The channel type included in the first type may include a downlink channel type.

In a possible implementation, the first type of channel may include a PDCCH, a downlink channel scheduled/activated/associated by the PDCCH, and the like, and may further include another channel. The following describes several possible implementations of the first type by using Content H2-1, Content H2-2, Content H2-3, Content H2-4, Content H2-5, Content H2-6, Content H2-7, and Content H2-8, the first type of channel may meet one or more of Content H2-1, Content H2-2, Content H2-3, Content H2-4, Content H2-5, Content H2-6, Content H2-7, and Content H2-8.

### Content H2-1: a PDCCH

Content H2-1 may include a PDCCH scrambled by a power saving (power saving, PS) -RNTI, and/or a PDCCH scrambled by a radio network temporary identifier for a network power saving cell.
**Content H2-2:** an SSB
**Content H2-3:** system information

That the first type of channel includes the system information may also be understood as that the first type of channel includes a PDSCH carrying the system information.

It should be noted that, the PDSCH carrying the system information is indicated by the PDCCH for transmission. Therefore, in the first time period, the terminal apparatus receives the PDCCH used for scheduling the PDSCH carrying the system information. The PDCCH may be a PDCCH scrambled by a system information (System Information, SI)-RNTI.

That the network apparatus sends (or the terminal apparatus receives) the PDCCH scrambled by the SI-RNTI may be understood as that the network apparatus sends (or the terminal apparatus receives) a PDSCH that is scheduled by the PDCCH scrambled by the SI-RNTI and that is used to transmit the system information.

Similarly, that the network apparatus does not send (or the terminal apparatus does not receive) the PDCCH scrambled by the SI-RNTI may be understood as that the network apparatus does not send (or the terminal apparatus does not receive) the PDSCH that is scheduled by the PDCCH scrambled by the SI-RNTI and that is used to transmit the system information.

### Content H2-4: a paging message

The first type of channel includes the paging message, and it may also be understood as that the first type of channel includes a PDSCH carrying the paging message.

It should be noted that the PDSCH carrying the paging message is indicated by a PDCCH for transmission. Therefore, in the first time period, the terminal apparatus receives the PDCCH used for scheduling the PDSCH carrying the paging message. The PDCCH may be one or more of a PDCCH scrambled by a paging (paging, P)-RNTI and a PDCCH scrambled by a PEI-RNTI.

That the network apparatus sends (or the terminal apparatus receives) the PDCCH scrambled by the P-RNTI (or the PEI-RNTI) may be understood as that the network apparatus sends (or the terminal apparatus receives) a PDSCH that is scheduled by the PDCCH scrambled by the P-RNTI and that is used to transmit the paging message.

Similarly, that the network apparatus does not send (or the terminal apparatus does not receive) the PDCCH scrambled by the P-RNTI may be understood as that the network apparatus does not send (or the terminal apparatus does not receive) the PDSCH that is scheduled by the PDCCH scrambled by the P-RNTI (or the PEI-RNTI) and that is used to transmit the paging message.

### Content H2-5: a random access message

Content H2-5 may include, for example, one or more of a random access message 2, a random access message 4, or a random access message B.

It should be noted that the first type of channel includes a random access message, and it may be understood as that the first type of channel includes a PDSCH used to carry the random access message.

It should be noted that the PDSCH carrying the random access message is indicated by a PDCCH for transmission. Therefore, in the first time period, the terminal apparatus receives the PDCCH used for scheduling the PDSCH carrying the random access message. The PDCCH may be one or more of a PDCCH scrambled by a random access (random access, RA)-RNTI, a PDCCH scrambled by a temporary cell (Temporary Cell, TC)-RNTI, or a PDCCH scrambled by a random access message B (message B, MsgB)-RNTI.

That the network apparatus sends (or the terminal apparatus receives) the PDCCH scrambled by the RA-RNTI may be understood as that the network apparatus sends (or the terminal apparatus receives) a PDSCH that is scheduled by the PDCCH scrambled by the RA-RNTI and that is used to transmit the random access message 2.

Similarly, that the network apparatus does not send (or the terminal apparatus does not receive) the PDCCH scrambled by the RA-RNTI may be understood as that the network apparatus does not send (or the terminal apparatus does not receive) the PDSCH that is scheduled by the PDCCH scrambled by the RA-RNTI and that is used to transmit the random access message 2.

That the network apparatus sends (or the terminal apparatus receives) the PDCCH scrambled by the TC-RNTI may be understood as that the network apparatus sends (or the terminal apparatus receives) a PDSCH that is scheduled by the PDCCH scrambled by the TC-RNTI and that is used to transmit the random access message 4.

Similarly, that the network apparatus does not send (or the terminal apparatus does not receive) the PDCCH scrambled by the TC-RNTI may be understood as that the network apparatus does not send (or the terminal apparatus does not receive) the PDSCH that is scheduled by the PDCCH scrambled by the TC-RNTI and that is used to transmit the random access message 4.

That the network apparatus sends (or the terminal apparatus receives) the PDCCH scrambled by the MsgB-RNTI may be understood as that the network apparatus sends (or the terminal apparatus receives) a PDSCH that is scheduled by the PDCCH scrambled by the MsgB-RNTI and that is used to transmit the random access message B.

Similarly, that the network apparatus does not send (or the terminal apparatus does not receive) the PDCCH scrambled by the MsgB-RNTI may be understood as that the network apparatus does not send (or the terminal apparatus does not receive) the PDSCH that is scheduled by the PDCCH scrambled by the MsgB-RNTI and that is used to transmit the random access message B.
**Content H2-6:** Beam failure recovery (beam failure recovery, BFR)
**Content H2-7:** an SPS PDSCH

The network apparatus is configured with, by using RRC signaling, semi-persistent scheduling downlink data transmission. To be specific, in each cycle, the PDSCH is sent on a fixed time-frequency resource. Each time-frequency resource is referred to as an SPS PDSCH occasion (SPS PDSCH occasion), and may be interpreted as a sending opportunity, indicating that the time-frequency resource may be used to carry and send downlink data. The SPS PDSCH occasion may be configured and activated by using RRC signaling, or may be configured by using RRC signaling and activated by using a PDCCH after being configured by using the RRC signaling. Therefore, the terminal apparatus needs to receive, in the first time period, the PDCCH used to activate the SPS PDSCH. The PDCCH may be a PDCCH scrambled by a CS-RNTI.

**Content H2-8:** a PDSCH scheduled by a PDCCH scrambled by an MCS-C-RNTI.

It should be noted that the PDSCH scheduled by the PDCCH scrambled by the MCS-C-RNTI is indicated by the PDCCH for transmission. Therefore, in the first time period, the terminal apparatus receives the PDCCH scrambled by the MCS-C-RNTI.

That the network apparatus sends (or the terminal apparatus receives) the PDCCH scrambled by the MCS-C-RNTI may be understood as that the network apparatus sends (or the terminal apparatus receives) a PDSCH that is scheduled by the PDCCH scrambled by the MCS-C-RNTI.

Similarly, that the network apparatus does not send (or the terminal apparatus does not receive) the PDCCH scrambled by the MCS-C-RNTI may be understood as that the network apparatus does not send (or the terminal apparatus does not receive) the PDSCH that is scheduled by the PDCCH scrambled by the MCS-C-RNTI.

**Implementation H3:** The channel type included in the first type may be an uplink channel type and a downlink channel type.

In Implementation H3, it may also be understood as that the network apparatus is configured with the DTX mechanism of the network apparatus and the DRX mechanism of the network apparatus.

In Implementation H3, the first type of channel may include one or more channels in Implementation H1 (namely, one or more of Implementation H1-1 to Implementation H1-6), and the first type of channel may further include one or more channels in Implementation H2 (namely, one or more of Implementation H2-1 to Implementation H2-8).

**Implementation H4:** The first type does not include a semi-persistent signal and/or a periodic signal.

The semi-persistent signal includes a semi-persistent CSI-RS and a semi-persistent SRS.

The periodic signal includes one or more of an SSB, a SIB, a PRACH, a periodic CSI-RS, a periodic SRS, a CG PUSCH, and an SPS PDSCH.

In Implementation H4, in a possible implementation, it may be understood as that the first type includes all signals that do not include the semi-persistent signal and/or the periodic signal. In another possible implementation, Implementation H4 may be used in combination with Implementation H1, Implementation H2, or Implementation H3. For example, Implementation H4 is used in combination with Implementation H3. The first type of channel may be understood as a signal before the semi-persistent signal and/or the periodic signal in the channel type specified in Implementation H3 (channels specified in Implementation H3 may be one or more channels in Implementation H1 and one or more channels in Implementation H2).

In the solution shown in FIG. 8, there may also be a third time period that is in the first time period. For a related solution of the third time period, refer to the description in the embodiment in FIG. 4. Details are not described again.

In another possible implementation, in this embodiment of this application, a signal of a non-first-type may be a signal other than a signal of a first type in the following signal set. For such a signal, the terminal apparatus may not transmit the signal in the first time period, or may transmit the signal in the first time period.

The signal set includes content in the following (1), (2), (3), and (4):
(1) PDCCHs: a C-RNTI, a CI-RNTI, a CS-RNTI, an INT-RNTI, an SFI-RNTI, an SP-CSI-RNTI, a TPC-PUCCH-RNTI, a TPC-PUSCH-RNTI, a TPC-SRS-RNTI, an AI-RNTI, an SI-RNTI, an RA-RNTI, a TC-RNTI, P-RNTI, an MCS-C-RNTI, a PS-RNTI, a MsgB-RNTI, a PEI-RNTI, and a PDCCH scrambled by a radio network temporary identifier for a network power saving cell;
(2) dynamic signals: a PDSCH, a PUSCH, an aperiodic SRS, an aperiodic CSI-RS, and a PUSCH or a PUCCH carrying an aperiodic CSI-RS;
(3) common signals: an SSB, system information, a paging message, and a PRACH; and
(4) periodic/semi-persistent signals: a periodic CSI-RS, a semi-persistent CSI-RS, a PRACH, a periodic SRS, a semi-persistent SRS, an SPS PDSCH, an SR, a PUCCH carrying periodic CSI reporting, a PUCCH carrying semi-persistent CSI reporting, a HARQ-ACK for an SPS PDSCH, a CG-PUSCH, and a positioning reference signal (positioning reference signal, PRS).

Based on embodiments shown in FIG. 1, FIG. 2, FIG. 3, FIG. 4, FIG. 5, FIG. 6, FIG. 7, and FIG. 8 and the foregoing other content, **FIG. 9** shows an example of a possible schematic flowchart of a communication method according to an embodiment of this application. A solution in FIG. 8 is described by using an example in which a network apparatus and a terminal apparatus interact with each other for execution. For related descriptions of the network apparatus and the terminal apparatus, refer to the foregoing content. Details are not described again.

A difference between the embodiment shown in FIG. 9 and the embodiments shown in FIG. 4 and FIG. 8 lies in that: The terminal apparatus and/or the network apparatus are/is further configured with the DRX mechanism of the terminal apparatus, and active time in one cycle in the DRX mechanism of the terminal apparatus is referred to as a fourth time period. Inactive time in one cycle in the DRX mechanism of the terminal apparatus is referred to as a fifth time period. The following specifically describes specific behaviors of the terminal apparatus and the network apparatus in the fourth time period and/or the fifth time period by using the solution shown in FIG. 9.

As shown in FIG. 9, the method includes the following steps.

**Step 901:** The network apparatus sends second information to the terminal apparatus.

Correspondingly, the terminal apparatus receives the second information from the network apparatus. The second information indicates that uplink channel transmission and downlink channel transmission are allowed in the fourth time period. Time of the fourth time period is DRX active time of the terminal apparatus.

In a possible implementation, the second information further indicates the fifth time period. Time of the fifth time period is DRX inactive time of the terminal apparatus. It can be learned from the foregoing content that the inactive time in the DRX mechanism of the terminal apparatus allows the terminal apparatus to transmit a part of channels. For related content, refer to the foregoing content. Details are not described again. In another possible implementation, the second information further indicates a first cycle, the first cycle is a cycle in the DRX mechanism of the terminal apparatus, and time other than the fourth time period in the first cycle may be the fifth time period.

In a possible implementation, the DRX active time of the terminal apparatus may include working time of a timer, and the timer may be one of a drx-onDurationTimer, a drx-InactivityTimer, a drx-RetransmissionTimerDL, a drx-RetransmissionTimerUL and a ra-ContentionResolutionTimer.

For the drx-onDurationTimer and the drx-InactivityTimer, refer to the foregoing descriptions. Details are not described again. The drx-RetransmissionTimerDL may be used to indicate the longest time for the terminal apparatus to wait for downlink retransmission data, and the timer is started when a drx-HARQ-RTT-TimerDL (used for downlink transmission) expires and corresponding downlink data is not correctly demodulated. Before the drx-RetransmissionTimerDL expires, the terminal apparatus is in the active time in the DRX mechanism of the terminal apparatus.

The drx-RetransmissionTimerUL may be used to indicate the longest time for the terminal apparatus to wait for an uplink retransmission grant (grant), and the timer is started when a drx-HARQ-RTT-TimerUL (used for uplink transmission) expires. Before the drx-RetransmissionTimerUL expires, UE is in an active period, and the terminal apparatus is in the active time in the DRX mechanism of the terminal apparatus.

The ra-ContentionResolutionTimer is a timer for waiting for receiving the Msg2 after the terminal apparatus sends the PRACH. Before the ra-ContentionResolutionTimer expires, the terminal apparatus attempts to receive the Msg2. In other words, the terminal apparatus detects the PDCCH that schedules the Msg2, and receives the Msg2 after detecting the PDCCH that schedules the Msg2. Therefore, before the ra-ContentionResolutionTimer expires, the terminal apparatus is in the active time in the DRX mechanism of the terminal apparatus.

**Step 902:** The network apparatus sends first information to the terminal apparatus.

Correspondingly, the terminal apparatus receives the first information from the network apparatus.

The first information in step 902 may be the first information in the foregoing step 401. For example, the first information indicates that all uplink channels and/or downlink channels are not transmitted in the first time period. Alternatively, the first information in step 902 may be the first information in step 801. For example, the first information indicates that transmission of the first type of channel is allowed in the first time period. The first information further indicates that all uplink channels and all downlink channels are allowed to be transmitted in the second time period.

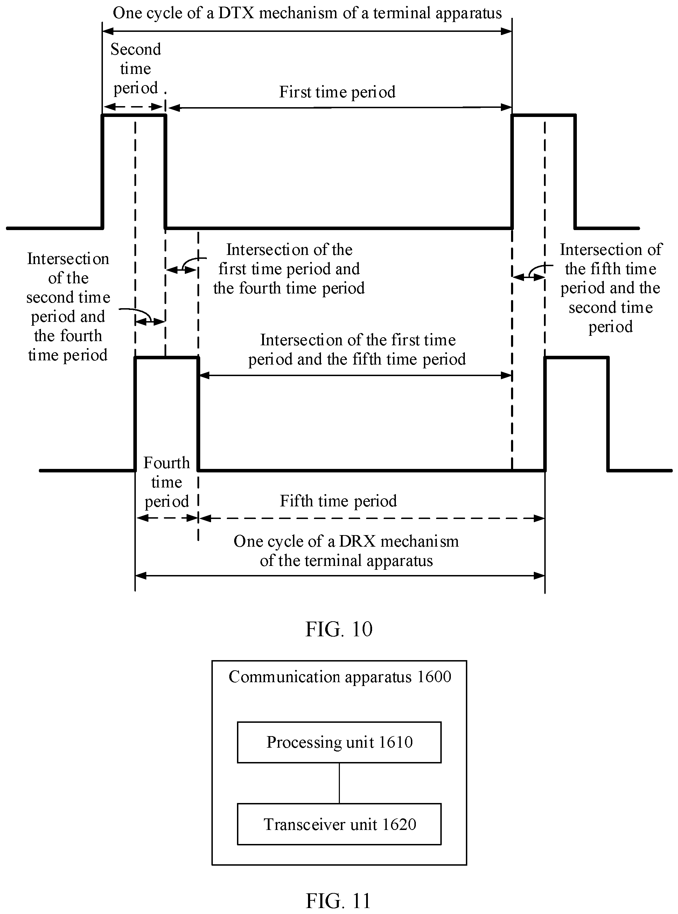

**FIG. 10** shows an example of one cycle in the DRX mechanism of the terminal apparatus and one cycle in the DTX mechanism of the network apparatus. As shown in FIG. 10, each time period in the first time period and the second time period has an intersection with the fourth time period and the fifth time period respectively. A specific processing manner of the terminal apparatus in each intersection is described subsequently, and details are not described herein.

**Step 903:** When there is an intersection of the fourth time period and the first time period, in the intersection of the fourth time period and the first time period, the terminal apparatus does not send all uplink channels and/or does not receive all downlink channels; transmits a second type of channel; transmits a first type of channel; transmits the second type of channel and the first type of channel; or sends all the uplink channels and/or receives all the downlink channels.

The first time period may be inactive time in the DTX mechanism of the network apparatus and/or inactive time in the DRX mechanism of the network apparatus. In this case, the first information may indicate one or more of not transmitting all downlink channels or not transmitting all uplink channels in the first time period, or allowing transmission of the first type of channel in the first time period. In other words, the first information in the embodiment shown in FIG. 10 may be the information in the embodiment shown in FIG. 4, or may be the information in the embodiment shown in FIG. 8. When there is an intersection of the fourth time period and the first time period, it may be understood as that the active time in the DRX mechanism of the terminal apparatus overlaps with the inactive time in the DTX mechanism of the network apparatus and/or the DRX mechanism of the network apparatus. In this case, the following provides several possible examples in which the terminal apparatus performs processing by using Implementation J1, Implementation J2, Implementation J3, and Implementation J4 in this embodiment of this application.

**Implementation J1:** When there is an intersection of the fourth time period and the first time period, the terminal apparatus may perform one of Implementation J1-1, Implementation J1-2, Implementation J1-3, Implementation J1-4, and Implementation J1-5 in the intersection of the fourth time period and the first time period.

**Implementation J1-1:** In the intersection of the fourth time period and the first time period, the terminal apparatus skips transmitting a first channel.

In this implementation, for example, the first information may indicate not to transmit the first channel in the first time period, and the first channel includes all uplink signals and/or all downlink channels.

In this implementation, the terminal apparatus may also perform a related solution in the intersection of the fourth time period and the first time period based on an indication of the first information. For example, in the intersection of the fourth time period and the first time period, the terminal apparatus, based on the first information, skips transmitting the first channel, and the first channel includes all uplink signals and/or all downlink channels.

That the terminal apparatus does not receive all the downlink channels and/or does not send all the uplink channels in the intersection of the fourth time period and the first time period may include: At a start time domain location of the first time period, the terminal apparatus stops a timer that is working, where the timer may be one of a drx-onDurationTimer, a drx-InactivityTimer, a drx-RetransmissionTimerDL, a drx-RetransmissionTimerUL and a ra-ContentionResolutionTimer.

In this implementation, in the first time period, when the network apparatus does not send a signal and/or does not receive a signal, the terminal apparatus does not send, based on the DRX mechanism of the terminal apparatus, some signals that are not received by the network apparatus, and the terminal apparatus does not attempt, based on the DRX mechanism of the terminal apparatus, to receive a signal that is not sent by the network apparatus. In this way, a problem of a conflict caused by an overlap between the active time in the DRX mechanism of the terminal apparatus and the inactive time in the DTX mechanism of the network apparatus can be resolved, and power consumption of the terminal apparatus and the network apparatus can be reduced.

**Implementation J1-2:** In the intersection of the fourth time period and the first time period, the terminal apparatus transmits a first type of channel.

In this implementation, the first information may also indicate that transmission of the first type of channel is allowed in the first time period. In this implementation, it may also be understood as that the terminal apparatus may also perform a related solution in the intersection of the fourth time period and the first time period based on an indication of the first information.

For example, in the intersection of the fourth time period and the first time period, the terminal apparatus transmits the first type of channel. In the intersection of the fourth time period and the first time period, the terminal apparatus may not transmit a non-first type of channel, or may transmit a channel having an association relationship with the first type of channel. For related descriptions of this content, refer to the foregoing related content of the first type. Details are not described again. For related descriptions of the first type, refer to the foregoing content. Details are not described again.

In this implementation, in the first time period, when the network apparatus skips transmitting the non-first type of channel, the terminal apparatus does not send, based on the DRX mechanism of the terminal apparatus, some signals that are not received by the network apparatus, and the terminal apparatus does not attempt, based on the DRX mechanism of the terminal apparatus, to receive a signal that is not sent by the network apparatus. In this way, a problem of a conflict caused by an overlap between the active time in the DRX mechanism of the terminal apparatus and the inactive time in the DTX mechanism of the network apparatus can be resolved, and power consumption of the terminal apparatus and the network apparatus can be reduced.

**Implementation J1-3:** In the intersection of the fourth time period and the first time period, the terminal apparatus transmits a second type of channel.

In this implementation, the first information may indicate not to transmit a first channel in the first time period, and the first channel includes all uplink signals and/or all downlink channels. Alternatively, the first information may also indicate that transmission of the first type of channel is allowed in the first time period.

For example, in the intersection of the fourth time period and the first time period, the terminal apparatus transmits the second type of channel. In the intersection of the fourth time period and the first time period, the terminal apparatus may not transmit a non-second type of channel, or may transmit a channel having an association relationship with the second type of channel. For related descriptions of this content, refer to the foregoing related content of the second type. Details are not described again. For related descriptions of the second type, refer to the foregoing content. Details are not described again.

In this implementation, in the first time period, if the terminal apparatus is in the active time in the DRX mechanism of the terminal apparatus, it indicates that the terminal apparatus has a data transmission requirement. Therefore, in the intersection of the fourth time period and the first time period, the terminal apparatus may transmit the second type of channel instead of all signals. This not only helps the terminal apparatus to perform fast data transmission, but also reduces signals that need to be received and sent by the network apparatus, and helps the network apparatus further save power.

**Implementation J1-4:** In the intersection of the fourth time period and the first time period, the terminal apparatus transmits the first type of channel and the second type of channel.

In this implementation, the first information may indicate not to transmit the first channel in the first time period, and the first channel includes all uplink signals and/or all downlink channels. Alternatively, the first information may also indicate that transmission of the first type of channel is allowed in the first time period.

For example, in the intersection of the fourth time period and the first time period, the terminal apparatus transmits the first type of channel and the second type of channel. In the intersection of the fourth time period and the first time period, the terminal apparatus may not transmit the non-first type of channel, or may transmit a channel having an association relationship with the first type of channel. In the intersection of the fourth time period and the first time period, the terminal apparatus may not transmit the non-second-type of channel, or may transmit a channel having an association relationship with the second type of channel.

In this implementation, in the first time period, if the terminal apparatus is in the active time in the DRX, it indicates that the terminal apparatus has a data transmission requirement. Therefore, in the intersection of the fourth time period and the first time period, the terminal apparatus may transmit not only the first type of channel, but also the second type of channel, but not all signals. This not only helps the terminal apparatus perform fast data transmission, but also helps reduce signals that need to be received and sent by the network apparatus, and helps the network apparatus further save power.

**Implementation J1-5:** In the intersection of the fourth time period and the first time period, the terminal apparatus receives all downlink channels and all uplink channels.

In this implementation, the first information may indicate not to transmit the first channel in the first time period, and the first channel includes all uplink signals and/or all downlink channels. Alternatively, the first information may also indicate that transmission of the first type of channel is allowed in the first time period.

In the intersection of the fourth time period and the first time period, the terminal apparatus receives all the downlink channels and sends all the uplink channels. In this implementation, in the first time period, if the terminal apparatus is in the DRX active time, it indicates that the terminal apparatus has a data transmission requirement. Therefore, in the intersection of the fourth time period and the first time period, the terminal apparatus may send all uplink signals and receive all downlink signals. This helps the terminal apparatus perform fast data transmission.

**Implementation J2:** There is an intersection of the fifth time period and the second time period. Time of the fifth time period is DRX inactive time of the terminal apparatus. It can be learned from the foregoing content that the inactive time in the DRX mechanism of the terminal apparatus allows the terminal apparatus to transmit a part of channels. For related content, refer to the foregoing content. Details are not described again. The second time period is active time in the DTX mechanism of the network apparatus and/or active time in the DRX mechanism of the network apparatus.

In the intersection of the fifth time period and the second time period, the terminal apparatus may perform one of Implementation J2-1, Implementation J2-2, and Implementation J2-3.

**Implementation J2-1:** In the intersection of the fifth time period and the second time period, the terminal apparatus transmits a first type of channel.

In the intersection of the fifth time period and the second time period, the terminal apparatus transmits the first type of channel. In the intersection of the fifth time period and the second time period, the terminal apparatus may not transmit a non-first type of channel, or may transmit a channel having an association relationship with the first type of channel. For related descriptions of this content, refer to the foregoing related content of the first type. Details are not described again. For related descriptions of the first type, refer to the foregoing content. Details are not described again. In this way, a problem of a conflict caused by an overlap between the inactive time in the DRX mechanism of the terminal apparatus and the DTX of the network apparatus and/or the active time in the DRX mechanism of the network apparatus can be resolved. In addition, because the terminal apparatus is already in the DTX active time of the network apparatus and/or the active time in the DRX mechanism of the network apparatus, the terminal apparatus sends or receives some necessary signals, to ensure communication connection performance of the network apparatus and the terminal apparatus.

**Implementation J2-2:** In the intersection of the fifth time period and the second time period, the terminal apparatus transmits the first type of channel and a second type of channel.

In the intersection of the fifth time period and the second time period, the terminal apparatus transmits the first type of channel and the second type of channel. In the intersection of the fifth time period and the second time period, the terminal apparatus may not transmit the non-first type of channel, or may transmit a channel having an association relationship with the first type of channel. In the intersection of the fifth time period and the second time period, the terminal apparatus may not transmit the non-second-type of channel, or may transmit a channel having an association relationship with the second type of channel.

In this implementation, in the second time period, if the terminal apparatus is in the DTX active time of the network apparatus and/or the active time in the DRX mechanism of the network apparatus, the terminal apparatus may send or receive some necessary signals to ensure communication connection performance of the network apparatus and the terminal apparatus, and the network apparatus may have a data transmission requirement. Therefore, in the intersection of the fifth time period and the second time period, the terminal apparatus may transmit not only the first type of channel but also the second type of channel. This helps the terminal apparatus perform fast data transmission.

**Implementation J2-3:** In the intersection of the fifth time period and the second time period, the terminal apparatus receives all downlink channels and all uplink channels.

In the intersection of the fifth time period and the second time period, the terminal apparatus receives all the downlink channels and sends all the uplink channels. In this implementation, in the second time period, if the terminal apparatus is in the active time in the DRX and/or DTX of the network apparatus, the terminal apparatus may send all uplink signals and receive all downlink signals in the intersection of the fifth time period and the second time period. This helps the terminal apparatus perform fast data transmission.

**Implementation J3:** When there is an intersection of the fifth time period and the first time period, in the intersection of the fifth time period and the first time period, a solution that may be executed by the terminal apparatus may match content of the first time period indicated by the first information.

For example, the first information may indicate that the first channel is not transmitted in the first time period, the first channel includes all uplink channels and/or all downlink channels, and the terminal apparatus skips transmitting the first channel in the intersection of the fifth time period and the first time period. Therefore, power consumption of the terminal apparatus can be reduced, and power consumption of the network apparatus can also be reduced.

For another example, the first information may also indicate that transmission of the first type of channel is allowed in the first time period. The terminal apparatus transmits the first type of channel in the intersection of the fifth time period and the first time period, and may not transmit the non-first type of channel, or may transmit the non-first type of channel (for example, a channel having an association relationship with the first type). This reduces power consumption of the terminal apparatus and further reduces power consumption of the network apparatus.

**Implementation J4:** When there is an intersection of the fourth time period and the second time period, in the intersection of the fourth time period and the second time period, the terminal apparatus may receive all the downlink channels and/or send all the uplink channels.

**Step 904:** When there is the intersection of the fourth time period and the first time period, in the intersection of the fourth time period and the first time period, the network apparatus does not receive all uplink channels and/or does not send all downlink channels; transmits the second type of channel; transmits the first type of channel, transmits the first type of channel and the second type of channel; or receives all the uplink channels and/or sends all the downlink channels.

The solution executed by the network apparatus in each intersection shown in FIG. 10 is similar to the solution executed by a terminal apparatus side in step 903, and a difference lies only in an execution body. For example, the network apparatus may execute any one or more of Implementations J1 to J4. For related content, refer to the foregoing description, and details are not described herein again.

It should be noted that, names of the foregoing messages are merely examples. With evolution of communication technologies, the name of any one of the foregoing messages may change. However, regardless of how the names of the messages change, the messages fall within the protection scope of this application provided that meanings of the messages are the same as those of the foregoing messages in this application.

The terms "system" and "network" may be used interchangeably in embodiments of this application. "At least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates that the associated objects are in an "or" relationship. For example, "signaling/data" in embodiments of this application are signaling or data. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, unless otherwise specified, ordinal numbers such as "first" and "second" in embodiments of this application are used to distinguish between a plurality of obj ects, and are not used to limit a sequence, a time sequence, priorities, or importance of the plurality of objects.

In embodiments of this application, sending information to the terminal device may be understood as that a destination of the information is the terminal device. For example, that a module A sends information to a terminal includes: The module A sends the information to the terminal through an air interface. Optionally, the module A may perform a baseband and/or intermediate radio frequency operation on the information; or the module A submits the information to a module B, and the module B sends the information to the terminal. When sending the information to the terminal, the module B may transparently transmit the information, segment the information and then send the information, or multiplex the information and other information and then send the information. Optionally, the module B may perform a baseband and/or intermediate radio frequency operation on the information and then send the information. Optionally, the module B may encapsulate the information in a data packet. Optionally, the module B may further add a header and/or a padding bit to the data packet.

In embodiments of this application, that information is received from the terminal device may be understood as that a source of the information is the terminal device. For example, that the module A receives information from the terminal device includes: The module A receives the information from the terminal through an air interface. Optionally, the module A may perform a baseband and/or intermediate radio frequency operation on the information; or the module B receives the information from the terminal through an air interface, and submits the information to the module A. That the module B submits the information to the module A includes: transparently submitting the received information to the module A, combining a plurality of received segments into the information and then submitting the information to the module A, or extracting the information from multiplexing information and then submitting the information to the module A. Optionally, the module B may perform a baseband and/or intermediate radio frequency operation on received information and then send the information. Optionally, the information received by the module B is encapsulated in a data packet. Optionally, the data packet includes a header and/or a padding bit, and the like.

The module B may be one module, or may be a plurality of modules coupled in sequence, which is not limited. For example, the module A is a DU module, and the module B is an RU module. For another example, the module A is a CU-CP module, and the module B is a DU module and an RU module.

The foregoing mainly describes, from a perspective of interactions between the network elements, the solutions provided in this application. It may be understood that, to implement the foregoing functions, the foregoing network elements include corresponding hardware structures and/or software modules for performing the functions. A person of ordinary skill in the art should easily be aware that, in combination with the examples described in embodiments disclosed in this specification, units, algorithms and steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

It may be understood that, to implement the functions in the foregoing embodiments, the network apparatus and the terminal apparatus include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

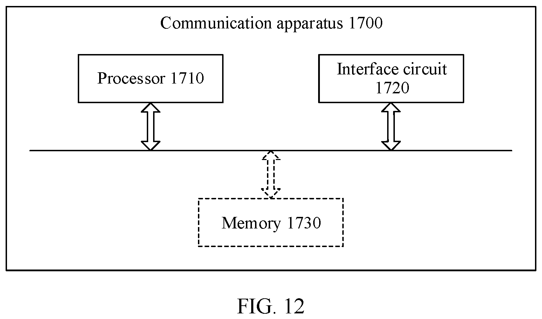

FIG. 11 and FIG. 12 each are a schematic of a possible structure of a communication apparatus according to an embodiment of this application. The communication apparatuses may be configured to implement functions of the terminal apparatus or the network apparatus in the foregoing method embodiments. Therefore, beneficial effects of the foregoing method embodiments can also be implemented. In this embodiment of this application, the communication apparatus may be one of the terminal apparatuses 120a to 120j shown in FIG. 1, or may be the network apparatus 110a or 110b shown in FIG. 1, or may be a module (for example, a chip) used in a terminal apparatus or a network apparatus.

As shown in FIG. 11, a communication apparatus 1600 includes a processing unit 1610 and a transceiver unit 1620.

In a possible implementation, the communication apparatus 1600 is configured to implement a function of the terminal apparatus or the network apparatus in the method embodiment shown in FIG. 4.

When the communication apparatus 1600 is configured to implement the function of the terminal apparatus in the method embodiment shown in FIG. 4, the transceiver unit 1620 is configured to receive first information from the network apparatus, where the first information indicates that transmission of a first channel is not allowed in a first time period, and the first channel includes all uplink channels and/or all downlink channels. The processing unit 1610 is configured to skip transmitting, based on the first information, the first channel in the first time period.

In another possible implementation, the processing unit 1610 is configured to: when the first information further indicates that uplink channel transmission is allowed in a second time period, send the uplink channel in the second time period by using the transceiver unit 1620. The processing unit 1610 is configured to: when the first information further indicates that downlink channel transmission is allowed in the second time period, receive the downlink channel in the second time period by using the transceiver unit 1620.

In another possible implementation, the processing unit 1610 is configured to: when a preset first condition is met, transmit a second type of channel in a third time period that is in the first time period by using the transceiver unit 1620.

When the communication apparatus 1600 is configured to implement the function of the network apparatus in the method embodiment shown in FIG. 4, the transceiver unit 1620 is configured to send the first information to the terminal apparatus, where the first information indicates that transmission of the first channel is not allowed in the first time period, and the first channel includes all uplink channels and/or all downlink channels. The processing unit 1610 is configured to skip transmitting, based on the first information, the first channel in the first time period.

In another possible implementation, the processing unit 1610 is configured to: when the first information further indicates that uplink channel transmission is allowed in a second time period, receive the uplink channel in the second time period by using the transceiver unit 1620. The processing unit 1610 is configured to: when the first information further indicates that downlink channel transmission is allowed in the second time period, send the downlink channel in the second time period by using the transceiver unit 1620.

In another possible implementation, the processing unit 1610 is configured to: when a preset first condition is met, transmit a second type of channel in a third time period that is in the first time period by using the transceiver unit 1620.

For more detailed descriptions of the processing unit 1610 and the transceiver unit 1620, directly refer to related descriptions in the method embodiment shown in FIG. 4. Details are not described herein again.

In another possible implementation, the communication apparatus 1600 is configured to implement a function of the terminal apparatus or the network apparatus in the method embodiment shown in FIG. 8.

When the communication apparatus 1600 is configured to implement a function of the terminal apparatus in the method embodiment shown in FIG. 10, the transceiver unit 1620 is configured to receive first information from the network apparatus, where the first information indicates that transmission of a first type of channel is allowed in a first time period. The processing unit 1610 is configured to transmit the first type of channel in the first time period based on the first information.

In another possible implementation, the processing unit 1610 is configured to skip transmitting, based on the first information, a non-first-type of channel in the first time period.

In another possible implementation, the processing unit 1610 is configured to: when the first information further indicates that uplink channel transmission is allowed in a second time period, send the uplink channel in the second time period by using the transceiver unit 1620. The processing unit 1610 is configured to: when the first information further indicates that downlink channel transmission is allowed in the second time period, receive the downlink channel in the second time period by using the transceiver unit 1620.

In another possible implementation, the processing unit 1610 is configured to: when a preset first condition is met, transmit a second type of channel in a third time period that is in the first time period by using the transceiver unit 1620.

When the communication apparatus 1600 is configured to implement a function of the network apparatus in the method embodiment shown in FIG. 10, the transceiver unit 1620 is configured to send first information to the terminal apparatus, where the first information indicates that transmission of a first type of channel is allowed in a first time period. The processing unit 1610 is configured to transmit the first type of channel in the first time period based on the first information.

In another possible implementation, the processing unit 1610 is configured to skip transmitting, based on the first information, a non-first-type of channel in the first time period.

In another possible implementation, the processing unit 1610 is configured to: when the first information further indicates that uplink channel transmission is allowed in a second time period, receive the uplink channel in the second time period by using the transceiver unit 1620. The processing unit 1610 is configured to: when the first information further indicates that downlink channel transmission is allowed in the second time period, send the downlink channel in the second time period by using the transceiver unit 1620.

In another possible implementation, the processing unit 1610 is configured to: when a preset first condition is met, transmit a second type of channel in a third time period that is in the first time period by using the transceiver unit 1620.

For more detailed descriptions of the processing unit 1610 and the transceiver unit 1620, directly refer to related descriptions in the method embodiment shown in FIG. 10. Details are not described herein again.

In another possible implementation, the communication apparatus 1600 is configured to implement a function of the terminal apparatus or the network apparatus in the method embodiment shown in FIG. 9.

When the communication apparatus 1600 is configured to implement the function of the terminal apparatus in the method embodiment shown in FIG. 10, the transceiver unit 1620 receives second information from the network apparatus. The second information indicates that uplink channel transmission and downlink channel transmission are allowed in a fourth time period, and time of the fourth time period is DRX active time of the terminal apparatus. The processing unit 1610 is configured to: when there is an intersection of the fourth time period and the first time period, perform, by using the transceiver unit 1620 in the intersection of the fourth time period and the first time period, the following operations: not sending all uplink channels and/or not receiving all downlink channels; transmitting a first type of channel; transmitting a second type of channel; transmitting the second type of channel and the first type of channel; or sending all the uplink channels and/or receiving all the downlink channels.

In another possible implementation, the processing unit 1610 is configured to: when there is an intersection of the fifth time period and the second time period, perform, by using the transceiver unit 1620 in the intersection of the fifth time period and the second time period, the following operations: transmitting a first type of channel, transmitting the first type of channel and a second type of channel, or sending the uplink channel and/or receiving the downlink channel.

When the communication apparatus 1600 is configured to implement the function of the network apparatus in the method embodiment shown in FIG. 10, the transceiver unit 1620 sends second information to the terminal apparatus. The second information indicates that uplink channel transmission and downlink channel transmission are allowed in a fourth time period, and time of the fourth time period is DRX active time of the terminal apparatus. The processing unit 1610 is configured to: when there is an intersection of the fourth time period and the first time period, perform, by using the transceiver unit 1620 in the intersection of the fourth time period and the first time period, the following operations: not receiving all uplink channels and/or not sending all downlink channels; transmitting a first type of channel; transmitting a second type of channel; transmitting the second type of channel and the first type of channel; or receiving all uplink channels and/or sending all downlink channels.

In another possible implementation, the processing unit 1610 is configured to: when there is an intersection of the fifth time period and the second time period, perform, by using the transceiver unit 1620 in the intersection of the fifth time period and the second time period, the following operations: transmitting a first type of channel, transmitting the first type of channel and a second type of channel, or sending the uplink channel and/or receiving the downlink channel.

For more detailed descriptions of the processing unit 1610 and the transceiver unit 1620, directly refer to related descriptions in the method embodiment shown in FIG. 9. Details are not described herein again.

As shown in FIG. 12, a communication apparatus 1700 includes a processor 1710 and an interface circuit 1720. The processor 1710 and the interface circuit 1720 are coupled to each other. It may be understood that the interface circuit 1720 may be a transceiver or an input/output interface. Optionally, the communication apparatus 1700 may further include a memory 1730, configured to: store instructions to be executed by the processor 1710, store input data required by the processor 1710 to run instructions, or store data generated after the processor 1710 runs instructions.

When the communication apparatus 1700 is configured to implement the method shown in FIG. 4 or FIG. 10, the processor 1710 is configured to implement a function of the processing unit 1610, and the interface circuit 1720 is configured to implement a function of the transceiver unit 1620.

When the communication apparatus is a chip used in the terminal apparatus, the chip in the terminal apparatus implements a function of the terminal apparatus in the foregoing method embodiment. The chip in the terminal apparatus receives information from another module (for example, a radio frequency module or an antenna) in the terminal apparatus, where the information is sent by the network apparatus to the terminal apparatus; or the chip in the terminal apparatus sends information to another module (for example, a radio frequency module or an antenna) in the terminal apparatus, where the information is sent by the terminal apparatus to the network apparatus.

When the communication apparatus is a module used in the network apparatus, the network apparatus module implements a function of the network apparatus in the foregoing method embodiment. The module in the network apparatus receives information from another module (for example, a radio frequency module or an antenna) in the network apparatus, where the information is sent by the terminal apparatus to the network apparatus; or the module in the network apparatus sends information to another module (for example, a radio frequency module or an antenna) in the network apparatus, where the information is sent by the network apparatus to the terminal apparatus. The module in the network apparatus herein may be a baseband chip of the network apparatus, or may be a DU or another module. The DU herein may be a DU in an open radio access network (open radio access network, O-RAN) architecture.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network apparatus or a terminal apparatus. Certainly, the processor and the storage medium may alternatively exist as discrete components in a network apparatus or a terminal apparatus.

All or some of the foregoing embodiments may be implemented by using software, hardware, firmware, or any combination thereof. When software is used for implementation, the implementation may be totally or partially implemented in a form of a computer program product. The computer program product includes one or more computer programs or instructions. When the computer program or the instructions are loaded and executed on a computer, all or some of procedures or functions in embodiments of this application are performed. The computer may be a general-purpose computer, a dedicated computer, a computer network, a network apparatus, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, like a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: the volatile storage medium and the non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

## Claims

1. A communication method, wherein the method comprises:
receiving first information from a network apparatus, wherein the first information indicates that transmission of a first channel is not allowed in a first time period, and the first channel comprises all uplink channels and/or all downlink channels; and
skipping transmitting, based on the first information, the first channel in the first time period.

2. A communication method, wherein the method comprises:
receiving first information from a network apparatus, wherein the first information indicates that transmission of a first type of channel is allowed in the first time period; and
transmitting the first type of channel in the first time period based on the first information.

3. The method according to claim 2, wherein the first type meets one of the following:
a channel type comprised in the first type is an uplink channel type;
a channel type comprised in the first type is a downlink channel type; or
a channel type comprised in the first type is an uplink channel type and a downlink channel type.

4. The method according to claim 3, wherein when the channel type comprised in the first type comprises the uplink channel type, the first type comprises one or more of a configured grant physical uplink shared channel CG PUSCH, a hybrid automatic repeat request feedback HARQ-ACK for a semi-persistent scheduling SPS PDSCH, a scheduling request SR, a physical random access channel PRACH, and a random access message 3; and/or
when the channel type comprised in the first type comprises the downlink channel type, the first type comprises one or more of a PDCCH of a radio network temporary identifier for a network power saving cell, a PDCCH scrambled by a power saving radio network temporary identifier PS-RNTI, a synchronization signal/physical broadcast channel block SSB, system information, a paging message, a random access message 2, a random access message 4, a random access message B, beam failure recovery BFR, and a semi-persistent scheduling physical downlink shared channel SPS PDSCH.

5. The method according to any one of claims 1 to 4, wherein the first information further indicates that uplink channel transmission and/or downlink channel transmission are/is allowed in a second time period; and
the method further comprises:
when the first information further indicates that the uplink channel transmission is allowed in the second time period, sending the uplink channel in the second time period; and
when the first information further indicates that the downlink channel transmission is allowed in the second time period, receiving the downlink channel in the second time period.

6. The method according to claim 5, wherein the method further comprises:
when a preset first condition is met, transmitting a second type of channel in a third time period that is in the first time period.

7. The method according to claim 6, wherein the first time period and the second time period are two time periods in one cycle, and the second time period is before the first time period; and
the first condition comprises one or more of the following:
in the second time period, indication information for scheduling downlink data or uplink data transmission is received;
in the second time period, indication information for activating an aperiodic signal is received;
in the second time period, information indicating to start a first timer is received, wherein an intersection of a time period indicated by the first timer and the first time period is the third time period;
a preset type of uplink channel is sent in the second time period; or
in the second time period, indication information indicating to extend the second time period is received, wherein the indication information indicating to extend the second time period indicates to extend the third time period after the second time period.

8. The method according to any one of claims 1 to 7, wherein the method further comprises:
receiving second information from the network apparatus, wherein the second information indicates that the uplink channel transmission and downlink channel transmission are allowed in a fourth time period, and time of the fourth time period is discontinuous reception DRX active time of a terminal apparatus; and
when there is an intersection of the fourth time period and the first time period, performing one of the following in the intersection of the fourth time period and the first time period:
skipping sending all the uplink channels and/or skipping receiving all the downlink channels;
transmitting the first type of channel;
transmitting the second type of channel;
transmitting the second type of channel and the first type of channel; or
sending all the uplink channels and/or receiving all the downlink channels.

9. The method according to claim 8, wherein the second information further indicates a fifth time period, and time of the fifth time period is discontinuous reception DRX inactive time of the terminal apparatus; and
the method further comprises:
when there is an intersection of the fifth time period and the second time period, and the fifth time period is the discontinuous reception DRS inactive time of the terminal apparatus, performing one of the following in the intersection of the fifth time period and the second time period:
transmitting the first type of channel;
transmitting the second type of channel and the first type of channel; or
sending the uplink channel and/or receiving the downlink channel.

10. The method according to any one of claims 7 to 9, wherein the second type meets one of the following:
a channel type comprised in the second type is an uplink channel type;
a channel type comprised in the second type is a downlink channel type; or
a channel type comprised in the second type is an uplink channel type and a downlink channel type, wherein
when the channel type comprised in the second type comprises the uplink channel type, the second type comprises one or more of an uplink channel corresponding to a first PDCCH or a CG PUSCH; and/or
when the channel type comprised in the second type comprises the downlink channel type, the second type comprises one or more of a PDCCH, a downlink channel corresponding to a second PDCCH, a periodic channel state information reference signal CSI-RS, a semi-persistent CSI-RS, and a semi-persistent scheduling SPS PDSCH, wherein
the PDCCH is a PDCCH received/detected in the second time period and/or the third time period, and the PDCCH comprises the first PDCCH and/or the second PDCCH.

11. The method according to claim 10, wherein
the uplink channel corresponding to the first PDCCH comprises one or more of a channel sounding reference signal SRS, a physical uplink shared channel PUSCH, a configured grant CG-PUSCH, a PUCCH carrying aperiodic CSI, and a PUSCH carrying aperiodic CSI; and
the downlink channel corresponding to the second PDCCH comprises one or more of a physical downlink shared channel, an SPS PDSCH, and an aperiodic CSI-RS.

12. The method according to claim 10, wherein
the first PDCCH comprises one or more of a PDCCH scrambled by a cell radio network temporary identifier C-RNTI, a PDCCH scrambled by a configured scheduling radio network temporary identifier CS-RNTI, a PDCCH scrambled by a modulation and coding scheme cell radio network temporary identifier MCS-C-RNTI, and a PDCCH scrambled by a semi-persistent channel state information radio network temporary identifier SP-CSI-RNTI; and
the second PDCCH comprises one or more of a PDCCH scrambled by a C-RNTI, a PDCCH scrambled by a CS-RNTI, and a PDCCH scrambled by an MCS-C-RNT.

13. The method according to any one of claims 6 to 12, wherein the second type does not comprise a semi-persistent signal and/or a periodic signal.

14. The method according to claim 13, wherein the semi-persistent signal comprises a semi-persistent CSI-RS and a semi-persistent SRS; and
the periodic signal comprises one or more of an SSB, a system information block SIB, a PRACH, a periodic CSI-RS, a periodic SRS, a CG PUSCH, and an SPS PDSCH.

15. A communication method, wherein the method comprises:
sending first information to a terminal apparatus, wherein the first information indicates that transmission of a first channel is not allowed in a first time period, and the first channel comprises all uplink channels and/or all downlink channels; and
skipping transmitting the first channel in the first time period.

16. A communication method, wherein the method comprises:
sending first information to a terminal apparatus, wherein the first information indicates that the network apparatus is allowed to transmit a first type of channel in a first time period; and
transmitting the first type of channel in the first time period.

17. The method according to claim 16, wherein the first type meets one of the following:
a channel type comprised in the first type is an uplink channel type;
a channel type comprised in the first type is a downlink channel type; or
a channel type comprised in the first type is an uplink channel type and a downlink channel type.

18. The method according to claim 17, wherein when the channel type comprised in the first type comprises the uplink channel type, the first type comprises one or more of a configured grant physical uplink shared channel CG PUSCH, a hybrid automatic repeat request feedback HARQ-ACK for a semi-persistent scheduling SPS PDSCH, a scheduling request SR, a physical random access channel PRACH, and a random access message 3; and/or
when the channel type comprised in the first type comprises the downlink channel type, the first type comprises one or more of a PDCCH of a radio network temporary identifier for a network power saving cell, a PDCCH scrambled by a power saving radio network temporary identifier PS-RNTI, a synchronization signal/physical broadcast channel block SSB, system information, a paging message, a random access message 2, a random access message 4, a random access message B, beam failure recovery BFR, and a semi-persistent scheduling physical downlink shared channel SPS PDSCH.

19. The method according to any one of claims 15 to 18, wherein the first information further indicates that uplink channel transmission and/or downlink channel transmission are/is allowed in a second time period; and
the method further comprises:
when the first information indicates that the uplink channel transmission is allowed in the second time period, sending the uplink channel in the second time period; and
when the first information indicates that the downlink channel transmission is allowed in the second time period, receiving the downlink channel in the second time period.

20. The method according to claim 19, wherein the method further comprises:
when a preset second condition is met, transmitting a second type of channel in a third time period that is in the first time period.

21. The method according to claim 20, wherein the first time period and the second time period are two time periods in one cycle, and the second time period is before the first time period; and
the second condition comprises one or more of the following:
in the second time period, indication information for scheduling downlink data or uplink data transmission is sent;
in the second time period, indication information for activating an aperiodic signal is sent;
in the second time period, information indicating to start a first timer is sent, wherein an intersection of a time period indicated by the first timer and the first time period is the third time period;
a preset type of uplink channel is received in the second time period; or
in the second time period, indication information indicating to extend the second time period is sent, wherein the indication information indicating to extend the second time period indicates to extend the third time period after the second time period.

22. The method according to any one of claims 15 to 21, wherein the method further comprises:
sending second information to the terminal apparatus, wherein the second information indicates that the uplink channel transmission and downlink channel transmission are allowed in a fourth time period, and the fourth time period is discontinuous reception DRX active time of the terminal apparatus; and
when there is an intersection of the fourth time period and the first time period, performing one of the following in the intersection of the fourth time period and the first time period:
skipping receiving all the uplink channels and/or skipping sending all the downlink channels;
transmitting the first type of channel;
transmitting the second type of channel;
transmitting the second type of channel and the first type of channel; or
receiving all the uplink channels and/or sending all the downlink channels.

23. The method according to claim 22, wherein the second information further indicates a fifth time period, and the fifth time period is discontinuous reception DRS inactive time of the terminal apparatus; and
the method further comprises:
when there is an intersection of the fifth time period and the second time period, performing one of the following in the intersection of the fifth time period and the second time period:
transmitting the first type of channel;
transmitting the second type of channel and the first type of channel; or
receiving the uplink channel and/or sending the downlink channel.

24. The method according to any one of claims 20 to 23, wherein the second type meets one of the following:
a channel type comprised in the second type is an uplink channel type;
a channel type comprised in the second type is a downlink channel type; or
a channel type comprised in the second type is an uplink channel type and a downlink channel type, wherein
when the channel type comprised in the second type comprises the uplink channel type, the second type comprises one or more of an uplink channel corresponding to a first PDCCH or a CG PUSCH; and/or
when the channel type comprised in the second type comprises the downlink channel type, the second type comprises one or more of a PDCCH, a downlink channel corresponding to a second PDCCH, a periodic channel state information reference signal CSI-RS, a semi-persistent CSI-RS, and a semi-persistent scheduling SPS PDSCH, wherein
the PDCCH is a PDCCH received/detected in the second time period and/or the third time period, and the PDCCH comprises the first PDCCH and/or the second PDCCH.

25. The method according to claim 24, wherein
the uplink channel corresponding to the first PDCCH comprises one or more of a channel sounding reference signal SRS, a physical uplink shared channel PUSCH, a configured grant CG-PUSCH, a PUCCH carrying aperiodic CSI, and a PUSCH carrying aperiodic CSI; and
the downlink channel corresponding to the second PDCCH comprises one or more of a physical downlink shared channel, an SPS PDSCH, and an aperiodic CSI-RS.

26. The method according to claim 24, wherein
the first PDCCH comprises one or more of a PDCCH scrambled by a cell radio network temporary identifier C-RNTI, a PDCCH scrambled by a configured scheduling radio network temporary identifier CS-RNTI, a PDCCH scrambled by a modulation and coding scheme cell radio network temporary identifier MCS-C-RNTI, and a PDCCH scrambled by a semi-persistent channel state information radio network temporary identifier SP-CSI-RNTI; and
the second PDCCH comprises one or more of a PDCCH scrambled by a C-RNTI, a PDCCH scrambled by a CS-RNTI, and a PDCCH scrambled by an MCS-C-RNT.

27. The method according to any one of claims 20 to 26, wherein the second type does not comprise a semi-persistent signal and/or a periodic signal.

28. The method according to claim 27, wherein the semi-persistent signal comprises a semi-persistent CSI-RS and a semi-persistent SRS; and
the periodic signal comprises one or more of an SSB, a system information block SIB, a PRACH, a periodic CSI-RS, a periodic SRS, a CG PUSCH, and an SPS PDSCH.

29. A communication apparatus, comprising a module configured to perform the method according to any one of claims 1 to 14, or comprising a module configured to perform the method according to any one of claims 15 to 28.

30. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, wherein the processor is configured to implement the method according to any one of claims 1 to 14 by using a logic circuit or executing code instructions, or the processor is configured to implement the method according to any one of claims 15 to 28 by using a logic circuit or executing code instructions.

31. A computer-readable storage medium, wherein the storage medium stores a computer program or instructions, and when the computer program or the instructions are executed by a communication apparatus, the method according to any one of claims 1 to 14 is implemented, or the method according to any one of claims 15 to 28 is implemented.

32. A computer program product, wherein the computer program product comprises instructions, and when the instructions are executed, the method according to any one of claims 1 to 14 is implemented, or the method according to any one of claims 15 to 28 is implemented.

33. A chip system, wherein the chip system comprises at least one processor and an interface circuit, the interface circuit and the at least one processor are interconnected through a line, and the processor performs the method according to any one of claims 1 to 28 by running instructions.
